# EUROPEAN PATENT APPLICATION

(11) **EP 4 707 353 A2**
(43) Date of publication of application: **11.03.2026**
(21) Application number: 26151319.6
(22) Date of filing: 22.05.2023
(51) Int. Cl.: C09J 7/00

(54) **COMPOSITE ADHESIVES COMPRISING POLYMERIC NANOPARTICLES**

(30) Priority: 25.05.2022 US 202263345542 P; 07.10.2022 US 202263414188 P
(62) Divisional of application: 23738573.7
(71) Applicant: 3M Innovative Properties Company, Saint Paul, Minnesota 55133-3427 (US)
(72) Inventor: MOUGHTON, Adam O., Saint Paul, 55133-3427 (US); MAHER, Michael J., Saint Paul, 55133-3427 (US); CARPENTER, Samuel J., Saint Paul, 55133-3427 (US); CHEN, Zhong, Saint Paul, 55133-3427 (US); NELSON, Jilliann M., Saint Paul, 55133-3427 (US); HEDEGAARD, Aaron T., Saint Paul, 55133-3427 (US); SCHNEIDERMAN, Deborah K., Saint Paul, 55133-3427 (US); ALI, Mahfuza B., Saint Paul, 55133-3427 (US)
(74) Representative: Mathys & Squire

(57) **Abstract**

Described herein is a composite adhesive composition. The composition comprises: a plurality of polymeric nanoparticles dispersed within a (meth)acrylate-based matrix; and the (meth)acrylate-based matrix is derived from a C₁ to C₁₂ (meth)acrylate ester monomer and a (meth)acrylate macromer. In some embodiments, these composite adhesives show good impact resistance and good dynamic shear resistance. Advantageously, an ionic liquid is added to the composite adhesive to enable electro-debonding.

## Description

### TECHNICAL FIELD

This disclosure relates to an impact resistant adhesive comprising a (meth)acrylate-based matrix with a plurality of polymeric nanoparticles dispersed therein.

### SUMMARY

In electronic devices, particularly mobile electronic devices (e.g., handheld or wearable electronic devices), pressure sensitive adhesives (PSAs) are typically used to bond the cover glass (or lens) to the underlying display module, bond the touch sensor to the cover glass and the display, or bond the lower components of the display to the housing. For these applications (commonly referred to as electronics bonding, or e-bonding), PSAs should have an adhesive strength that is sufficiently strong to properly maintain good adhesion to those components, not only when the mobile electronic devices are operating under normal conditions, but also when they are deformed by external forces (e.g., bending, folding, flexing), subjected to traumatic forces (e.g., dropping of the mobile electronic device onto a hard surface), or subjected to extreme environmental conditions (e.g. high temperatures and/or high humidity conditions). Regarding deformation, the components of the electronic devices may be deformed when a user sits in a chair while the electronic device is in their pocket or presses down on the electronic device with their hips. Under such conditions, the pressure sensitive adhesives should have strength of adhesion sufficient to maintain the adhesion to, for example, the cover glass (sometimes referred to as anti-lifting properties). Regarding traumatic forces, the pressure sensitive adhesives should have sufficient drop/impact resistance such that the pressure sensitive adhesive maintains adhesion of the components even when large instantaneous impacts are applied to the mobile electronic device when dropped.

Given the electronics industry's trend towards device simplification (i.e., combining layers and/or layer functions) and reducing bonding area and overall device thickness, (and moreover demanding enhanced mechanical durability), there exists a growing need for adhesive tapes that have good adhesion to device substrates, good impact/drop resistance, and sufficient shear resistance. Adhesives having this balance of dichotomous properties are needed.

In one aspect, a composition is disclosed. The composition comprises: (i) a plurality of polymeric nanoparticles wherein the polymeric nanoparticles comprise an interior region comprising a polymer having a glass transition temperature below room temperature and an outer shell comprising a polymer having a glass transition temperature of at least 50°C; and (ii) a polymerizable matrix comprising: (a) a (meth)acrylate macromer, wherein the (meth)acrylate macromer comprises a poly(ethylene oxide) group, a poly(propylene oxide) group, a poly(ethylene oxide-co-propylene oxide), a poly(tetrahydrofuran) group, or combinations thereof; (b) one or more of a C₁ to C₁₂ (meth)acrylate ester monomer; (c) a cross-linking agent; and (d) none to at most 7 wt % of a hydroxyl group-containing (meth)acrylate monomer.

In another aspect, a composition is disclosed. The composition comprises: (i) a plurality of polymeric nanoparticles wherein the polymeric nanoparticles comprise an interior region comprising a polymer having a glass transition temperature below room temperature and an outer shell comprising a polymer having a glass transition temperature of at least 50°C; and (ii) a matrix derived from (a) a (meth)acrylate macromer, wherein the (meth)acrylate macromer comprises a poly(ethylene oxide) group, a poly(propylene oxide) group, a poly(ethylene oxide-co-propylene oxide), a poly(tetrahydrofuran) group, or combinations thereof; (b) one or more of a C₁ to C₁₂ (meth)acrylate ester monomer; (c) a cross-linking agent; and (d) none to at most 7 wt % of a hydroxyl group-containing (meth)acrylate monomer.

In another aspect, an adhesive article is described. The adhesive article comprising a composite adhesive composition derived from one of the compositions described above, wherein the composite adhesive composition is disposed on a substrate.

In yet another embodiment, a method of making an adhesive article is described. The method comprising:
(i) obtaining a polymerizable matrix comprising:
   (a) a (meth)acrylate macromer, wherein the (meth)acrylate macromer comprises a poly(ethylene oxide) group, a poly(propylene oxide) group, a poly(ethylene oxide-co-propylene oxide), a poly(tetrahydrofuran) group, or combinations thereof;
   (b) one or more of a C₁ to C₁₂ (meth)acrylate ester monomer;
   (c) a cross-linking agent; and
   (d) none to at most 7 wt % of a hydroxyl group-containing (meth)acrylate monomer; and
(ii) adding a plurality of polymeric nanoparticles to the polymerizable matrix to form a composition.

In still another embodiment, a method of making an adhesive article is described. The method comprising:
(i) obtaining a polymerizable matrix comprising:
   (a) a (meth)acrylate macromer, wherein the (meth)acrylate macromer comprises a poly(ethylene oxide) group, a poly(propylene oxide) group, a poly(ethylene oxide-co-propylene oxide), a poly(tetrahydrofuran) group, or combinations thereof;
   (b) one or more of a C₁ to C₁₂ (meth)acrylate ester monomer;
   (c) a cross-linking agent; and
   (d) none to at most 7 wt % of a hydroxyl group-containing (meth)acrylate monomer; and
(ii) at least partially polymerizing the polymerizable matrix to form an at least partially polymerized composition, and
(iii) adding a plurality of polymeric nanoparticles, wherein the polymeric nanoparticles comprise an interior region comprising a polymer having a glass transition temperature below room temperature and an outer shell comprising a polymer having a glass transition temperature of at least 50°C.

The above summary is not intended to describe each embodiment. The details of one or more embodiments of the invention are also set forth in the description below. Other features, objects, and advantages will be apparent from the description and from the claims.

### DESCRIPTION OF THE FIGURES

Embodiments of the present disclosure are illustrated by way of example, in the accompanying drawings, which are for illustrative purposes only and not drawn to scale.
Fig. 1 is a schematic cross-sectional view of a multi-layered adhesive article comprising a composite adhesive layer according to one embodiment of the present disclosure; and
Fig. 2 is a schematic cross-sectional view of a composite adhesive layer according to one embodiment of the present disclosure.
Fig. 3A is a top view and Fig. 3B is a side view schematic of the test specimen for the random free fall test.
Fig. 4 is a schematic cross-sectional view of a multi-layered adhesive article comprising a composite adhesive layer according to one embodiment of the present disclosure.
Fig. 5 is a schematic cross-sectional view of a multi-layered adhesive article comprising a composite adhesive layer according to one embodiment of the present disclosure.

### DETAILED DESCRIPTION

As used herein, the term
"a", "an", and "the" are used interchangeably and mean one or more; and
"and/or" is used to indicate one or both stated cases may occur, for example A and/or B includes, (A and B) and (A or B);
"cross-linking" refers to connecting two pre-formed polymer chains using chemical bonds or chemical groups in order to increase the modulus of the material; and
"(meth)acrylate" refers to compounds containing either an acrylate (CH₂=CHCOOR) or a methacrylate (CH₂=CCH₃COOR) structure or combinations thereof.

As used herein, the term "macromer" refers to a monomer having a polymeric group. A macromer is a subset of the term "monomer".

The term "monomeric unit" refers to the reaction product of a polymerizable component (i.e., a monomer (including a macromer)) within the (meth)acrylate copolymer. As an example, the monomeric unit of acrylic acid 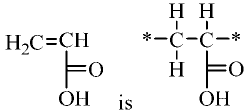 where the asterisks (*) indicate the attachment site to another group such as another monomeric unit or terminal group in the (meth)acrylate copolymer.

The term "(meth)acrylate macromer" refers to a monomer having a single (meth)acryloyloxy group (i.e., a group of formula CH₂=CR-(CO)-O- where R is hydrogen or methyl) plus a poly(ethylene oxide) group, poly(propylene oxide) group, poly(ethylene oxide-co-propylene oxide) group, or poly(tetrahydrofuran) group.

The term "poly(ethylene oxide) group" refers to a group that contains at least 3 ethylene oxide (-(C₂H₄O)-) groups and the term "poly(propylene oxide) group" refers to a group that contains at least 3 propylene oxide (-(C₃H₆O)-) groups.

The term "poly(ethylene oxide-co-propylene oxide) group" contains at least 3 groups that include at least one ethylene oxide group and at least one propylene oxide group. The poly(ethylene oxide-co-propylene oxide) group is a copolymeric group.

The term "poly(tetrahydrofuran) (meth)acrylate macromer" refers to a monomer having a single (meth)acryloyloxy group (i.e., a group of formula CH₂=CR-(CO)-O- where R is hydrogen or methyl) plus a poly(tetrahydrofuran) group that contains at least three -(C₄H₈O)- groups. The term "poly(tetrahydrofuran)" can be used interchangeably with the terms "poly(tetramethylene oxide)" and "poly(tetramethylene glycol)".

Also herein, recitation of ranges by endpoints includes all numbers subsumed within that range (e.g., 1 to 10 includes 1, 2 ,3 4 ,5, 6, 7, 8, 9, and 10).

Also herein, recitation of "at least" followed by a number include the recited number and all numbers greater (for example, "at least one" includes at least 2, at least 4, at least 6, at least 8, at least 10, at least 25, at least 50, at least 100, etc.).

The adhesives of the present disclosure are a composite comprising a plurality of polymeric nanoparticles dispersed in a (meth)acrylate-based matrix.

### Polymeric Nanoparticles

The particles of the present disclosure are polymeric comprising at least two different polymer regions, an interior polymeric region and an outer shell. The interior of the particle comprises a polymer having a glass transition temperature (Tg) below room temperature, while the outer shell of the particle comprises a polymer having a high Tg. Although not wanting to be limited by theory, it is believed that the low Tg polymer interior is able to absorb impact force, while the harder outer shell enables good dispersion of the particles in the matrix. The Tg of the particles can be determined, for example, by using Differential Scanning Calorimetry (DSC). If the particles are composed of separate polymers, then a peak should appear in the analysis for each separate polymer as long as the polymer is in sufficient quantity in the matrix (e.g., greater than 10% or even 5% by weight).

The polymeric particles of the present disclosure are nanostructured, meaning that the largest dimension (e.g., diameter) is less than 900, 800, 750, 500, 400, 350, or even 300 nanometers (nm). In one embodiment, the particles have an average particle diameter of at least 20, 50, 100, 150 or even 170 nm and at most 500, 400, 350, 300, 250, or even 200 nm. Particle size can be measured using techniques known in the art such as particle size analyzers (such as a Malvern Zetasizer) using calibrated standards or microscopy (e.g., scanning electron microscopy). In one embodiment, the interior polymeric region has an average size of at least 10, 20, or even 50 nm and at most 75, 100, 200, 300, 400, or even 500 nm. The size of the interior polymeric region can be measured using techniques known in the art, such as transmission electron microscopy.

In one embodiment, the polymer of the outer shell of the polymeric particle has a Tg of at least 50, 60, 70, 80, 100, 120, or even 150°C; and no more than 300, 250, 200 or even 175°C. In one embodiment, the outer shell comprises a poly(methyl methacrylate) or a poly (glycidyl methacrylate).

In one embodiment, the interior polymer of the polymeric particle has a Tg of less than 25, 23, 20, 15, 10, 5, 0, -10, -20, -25, or even -40°C and more than -120, -90, -80, -75, or even -50°C. Exemplary polymers useful for the interior of the polymeric particles include isoprene homopolymers or butadiene homopolymers, (meth)acrylic homopolymers or copolymers derived from (meth)acrylate monomers having 1 to 18 carbons (preferably, 4 to 18, or even more preferably 4 to 12 or even 4 to 8 carbon atoms), isoprene-butadiene copolymers, copolymers of isoprene with at most 98 wt% of a vinyl monomer, and copolymers of butadiene with at most 98 wt% of a vinyl monomer. The vinyl monomer may be styrene, an alkylstyrene, acrylonitrile, an alkyl (meth)acrylate, or butadiene or isoprene as long as the polymer results in the requisite low Tg interior portion. Multi-functional monomers may be used either during polymerization of the interior polymer or grafted onto the interior polymer to introduce sites for partial or complete crosslinking of the polymer. Such multifunctional (e.g., difunctional or trifunctional) monomers include poly(meth)acrylic esters of polyols, such as butanediol di(meth)acrylate and trimethylolpropane trimethacrylate; divinylbenzene; trivinylbenzene; and triallyl cyanurate. The addition of these functional groups can result in the shell being crosslinked into the polymeric matrix. Other monomers used for crosslinking of the polymer include unsaturated functional monomers such as anhydrides of unsaturated carboxylic acids, unsaturated carboxylic acids and unsaturated epoxide, maleic anhydride, (meth) acrylic acid and glycidyl methacrylate. The crosslinking may also be carried out by using the intrinsic reactivity of the monomers, for example the diene monomers.

In one embodiment, reactive functional groups (such as hydroxyl, glycidyl or acid groups) present on the exterior of the nanoparticle may be functionalized, for example, by reaction with an alkyl acetoacetoxy such as tert-butyl acetoacetoxy.

In one embodiment, the nanoparticles are a core-shell particle comprising a lower Tg polymer core encased by a higher Tg polymeric shell.

Exemplary shells of the present disclosure comprise styrene homopolymers, alkylstyrene homopolymers or methyl methacrylate homopolymers, or copolymers comprising at least 70 wt% of one of the above monomers and at least one comonomer, another alkyl (meth)acrylate, vinyl acetate, and/or acrylonitrile. As known in the art, the shell may be functionalized by introducing, by grafting or as a comonomer during the polymerization, unsaturated functional monomers such as anhydrides of unsaturated carboxylic acids, unsaturated carboxylic acids and unsaturated epoxides. For example, maleic anhydride, (meth)acrylic acid glycidyl methacrylate, hydroxyethyl methacrylate and alkyl (meth) acrylamides may be used. In one embodiment, the core-shell particle comprises a polystyrene shell and/or a copolymer having a polymethylmethacrylate (PMMA) shell. The shell may also contain imide functional groups, either by copolymerization with a maleimide or by chemical modification of the PMMA by a primary amine. Advantageously, the molar concentration of the imide functional groups is 30 to 60% (relative to the entire shell).

In one embodiment, the core-shell particles comprise a poly(methyl methacrylate) shell and a poly(butadiene-co-styrene) interior portion or core.

In one embodiment, the core-shell particle comprises more than one shell. There are also core-shell copolymers having two shells, one made of polystyrene and the other, on the outside, made of PMMA.

In one embodiment, the outermost shell in contact with the (meth)acrylate resin comprises a polymer having a Tg greater than 25, or even 50°C.

In one embodiment, the core-shell ratio is in a range in weight between 10/90 and 90/10; 40/60 and 90/10; 60/40 to 90/10; or even 70/30 and 85/15.

Core-shell particles comprising an elastomer core can be made using techniques known in the art. See for example EP 2 465 882 B1 (Navarro et al.). Such particles are also available commercially under the trade designation "CLEASTSTRENGTH XT100" and "W300" from Arkema, Cedex, France; "KANE ACE M731" and "KANE ACE B-564" from Kaneka Corp., Belgium; and "PARALOID EXL-2691J" from Dow Chemical Co., Midland, MI.

In the present disclosure, the plurality of polymeric nanoparticles are dispersed in a (meth)acrylate-based matrix to form a composite adhesive.

### (Meth)acrylate-based matrix

The matrix of the adhesive of the present disclosure is (meth)acrylate-based, derived from a (meth)acrylate macromer and a second (meth)acrylate monomer.

The (meth)acrylate macromer included in the polymerizable components used to form the (meth)acrylate-based matrix has a (meth)acryloyloxy group plus (i) a poly(ethylene oxide) group, (ii) poly(propylene oxide) group, (iii) poly(ethylene oxide-co-propylene oxide) group, which can also be referred to as a poly(ethylene glycol), poly(propylene glycol), or poly(ethylene glycol-co-propylene glycol) groups respectively, (iv) a poly(tetrahydrofuran) group, or (v) combinations thereof. If the macromer contains a poly(ethylene oxide) group, it can be referred to as a poly(ethylene oxide) (meth)acrylate. If the macromer contains a poly(propylene oxide) group, it can be referred to as a poly(propylene oxide) (meth)acrylate. If the macromer contains a poly(ethylene oxide-co-propylene oxide) group, it can be referred to as a poly(ethylene oxide-co-propylene oxide) (meth)acrylate, which is a copolymer. If the macromer contains a poly(tetrahydrofuran) group, it can be referred to as a poly(tetrahydrofuran) (meth)acrylate.

The (meth)acrylate macromer typically has a number average molecular weight in a range of 350 to 10,000 Daltons. For example, the (meth)acrylate macromer has a number average molecular weight no greater than 10,000, 8000, 6000, 4000, 2000, 1000, 800, 650, or even 500 Daltons. The number average can be determined by gel permeation chromatography using techniques known in the art.

The (meth)acrylate macromer often has a Tg (as measured using a homopolymer of the macromer) that is no greater than -10°C. For example, the glass transition temperature can be no greater than -10, -20, -30, or even -40oC. In one embodiment, the Tg is less than -70 or even -80 oC. Such a low macromer Tg imparts compliance and flexibility to the (meth)acrylate copolymer and to the adhesive composition.

Examples of such commercially available (meth)acrylate macromers include poly(ethylene glycol) methyl ether acrylate, such as that having a reported number average molecular weight (Mn) of 480 Daltons (available from Sigma-Aldrich) and poly(propylene glycol) acrylate, such as that having a reported number average molecular weight of 475 Daltons (available from Sigma-Aldrich). Other suitable macromers are available under the trade designation BISOMER from Geo Specialty Chemicals, Ambler, PA, such as BISOMER PPA6 (poly(propylene glycol) acrylate reported to have a number average molecular weight of 420 Daltons), BISOMER PEM63P HD (a mixture of poly(ethylene glycol) methacrylate and poly(propylene glycol) reported to have a number average molecular weight of 524 Daltons), BISOMER PPM5 LI (poly(propylene glycol) methacrylate reported to have a number average molecular weight of 376 Daltons), BISOMER PEM6 LD (poly(ethylene glycol) methacrylate reported to have a number average molecular weight of 350 Daltons), BISOMER MPEG350MA (methoxy poly(ethylene glycol) methacrylate) reported to have a number average molecular weight of 430 Daltons), and BISOMER MPEG550MA (methoxy poly(ethylene glycol) methacrylate reported to have a number average molecular weight of 628 Daltons). Other suitable macromers are available under the trade designation MIRAMER from Miwon Specialty Chemical Company, Gyeonggi-do, Korea, such as MIRAMER M193 MPEG600MA (methoxy poly(ethylene glycol) methacrylate reported to have a number average molecular weight of 668 Daltons, MIRAMER M164 (nonyl phenol poly(ethylene glycol) acrylate reported to have a number average molecular weight of 450 Daltons), MIRAMER M1602 (nonyl phenol poly(ethylene glycol) acrylate reported to have a number average molecular weight of 390 Daltons), and MIRAMER M166 (nonyl phenol poly(ethylene glycol) acrylate reported to have a number average molecular weight of 626 Daltons. Still other suitable macromers are available from Sans Esters Corporation, New York, NY such as MPEG-A400 (methoxy poly(ethylene glycol) acrylate reported to have a number average molecular weight of 400 Daltons), and MPEG-A550 (methoxy poly(ethylene glycol) acrylate reported to have a number average molecular weight of 550 Daltons. Various combinations of such macromers may be used if desired.

The macromer having the poly(tetrahydrofuran) group can be prepared, for example, by polymerizing tetrahydrofuran using cationic polymerization. More specifically, the polymerization reaction can occur at room temperature (e.g., 20 to 25°C) using trifluoromethanesulfonate as the initiator to form an intermediate (A) where n is equal to the number of -CH2CH2CH2CH2O-groups. Intermediate (A) is then reacted with hydroxybutyl acrylate in the presence of N,N-diisoproylethylamine to form the poly(tetrahydrofuran) (meth)acrylate macromer. The weight average molecular weight of the poly(tetrahydrofuran) (meth)acrylate macromer is typically in a range of 350 to 10,000 Daltons, which can be determined using known methods such as gel permeation chromatography with polystyrene standards. If the molecular weight is higher, it may not be miscible with the other components in the polymerizable composition and/or it may crystallize before, during, or after polymerization of the matrix. In many embodiments, the poly(tetrahydrofuran) (meth)acrylate macromer has a weight average molecular weight of at least 500, 600, 800, 1,000, 2,000 or even 3,000 Daltons and up to 10,000, 8,000, 6,000, 5,000, or even 3,000 Daltons.

The second (meth)acrylate monomer in the polymerizable matrix is a C₁ to C12 (meth)acrylate ester monomer. Useful C1 to C12 (meth)acrylate ester monomers include at least one monomer selected from the group consisting of a monofunctional (meth)acrylate ester of a linear, branched, and/or cyclic non-tertiary alkyl alcohol, the alkyl group of which comprises at least 1, 2, 3, 4, 5, 6, 7, or even 8 carbon atoms; and at most 10, 11, or even 12 carbon atoms. In one embodiment, the (meth)acrylate ester monomer comprises 1 to 12 carbon atoms. Exemplary second (meth)acrylate monomers include, methyl (meth)acrylate, ethyl (meth)acrylate, n-propyl (meth)acrylate, isopropyl (meth)acrylate, 2-methylbutyl acrylate, n-butyl acrylate, isobutyl acrylate, tert-butyl (meth)acrylate, n-pentyl (meth)acrylate, iso-pentyl (meth)acrylate, n-hexyl (meth)acrylate, iso-hexyl (meth)acrylate, cyclohexyl (meth)acrylate, phenyl (meth)acrylate, n-octyl (meth)acrylate, iso-octyl (meth)acrylate, 2-octyl(meth)acrylate, 2-ethylhexyl (meth)acrylate, decyl (meth)acrylate, lauryl (meth)acrylate, 2-propylheptyl (meth)acrylate, isobornyl (meth)acrylate, benzyl (meth)acrylate, nonyl acrylate, isophoryl (meth)acrylate, dodecyl (meth)acrylate, and any combinations or mixtures thereof.

In one embodiment, the second (meth)acrylate monomer used for the matrix is copolymerized with polar copolymerizable monomers. The polar copolymerizable monomers can be acid or non-acid functional polar monomers such as acrylic acid, hydroxyethyl acrylate, N-methyl acrylamide, or any monomer having a sidechain containing at least one of the following: alcohol, carboxylic acid, amine, amide, imide, thiol, ester, phosphate, and combinations thereof. Exemplary polar monomers include: acrylic acid, methacrylic acid, itaconic acid, fumaric acid, crotonic acid, citraconic acid, and maleic acid, hydroxyalkyl acrylates, acrylamides and substituted acrylamides (such as N,N-dialkylaminoalkyl (meth)acrylates or tert-octylacrylamide), acrylamines and substituted acrylamines, lactams and substituted lactams, β-carboxyethylacrylate, N-vinyl-2-pyrrolidone, N-vinyl caprolactam, acrylonitrile, and any combinations or mixtures thereof.

When copolymerized with strongly polar monomers, the second (meth)acrylate monomer generally comprises at least about 75 wt% of the polymerizable monomer composition for the matrix. When copolymerized with moderately polar monomers, the (meth)acrylate ester monomer generally comprises at least about 50 wt% of the polymerizable monomer composition for the matrix. Strongly polar monomers include mono-olefinic mono- and dicarboxylic acids, hydroxy alkyl acrylate, cyanoalkyl acrylates, acrylamides or substituted acrylamides, or from moderately polar monomers such as N-vinyl pyrrolidone, acrylonitrile, vinyl chloride or diallyl phthalate. The strongly polar monomer preferably comprises up to about 25 wt%, more preferably up to about 15 wt%, of the polymerizable monomer composition for the matrix. The moderately polar monomer preferably comprises up to about 30 wt%, more preferably from about 5 wt% to about 30 wt% of the polymerizable monomer composition for the matrix.

Additional monomers may be added to the polymerizable matrix composition to alter the performance of the matrix in the adhesive, such as a non-polar monomer. The non-polar monomer may be a non-polar ethylenically unsaturated monomer selected from monomers comprising a hydrocarbon sidechain. Examples of suitable non-polar comonomers include 3,3,5-trimethylcyclohexyl acrylate, cyclohexyl acrylate, t-butyl acrylate, methyl methacrylate, ethyl methacrylate, and combinations thereof.

A cross-linking agent is used to create a three-dimensional polymer network and to achieve high internal strength of the (meth)acrylate-based matrix within the adhesive. Useful cross-linking agents include photosensitive cross-linking agents, which are activated by ultraviolet (UV) light. Useful cross-linking agents include: multifunctional (meth)acrylates, triazines, and combinations thereof. Exemplary cross-linking agents include substituted triazines such as 2,4,-bis(trichloromethyl)-6-(4-methoxy phenyl)-s-triazine, 2,4-bis(trichloromethyl)-6-(3,4-dimethoxyphenyl)-s-triazine, and the chromophore-substituted halo-s-triazines disclosed in U.S. Pat. Nos. 4,329,384 and 4,330,590 (Vesley). Other useful cross-linking agents include multifunctional alkyl acrylate monomers such as trimetholpropane triacrylate, pentaerythritol tetraacrylate, 1,2 ethylene glycol diacrylate, 1,4 butanediol diacrylate, 1,6 hexanediol diacrylate, and 1,12 dodecanol diacrylate. Various other cross-linking agents with different molecular weights between (meth)acrylate functionality may also be useful.

In the present disclosure, the (meth)acrylic ester (such as a C1 to C12 (meth)acrylate ester) monomer, the (meth)acrylate macromer, and any optional comonomer are polymerized to form the (meth)acrylate-based matrix. The (meth)acrylate-based matrix should be derived from no more than 7 wt % of a hydroxyl group-containing (meth)acrylate monomer. For example, no more than 7, 6, 5, 4, 2, 1, or even 0.5 wt % or even no hydroxyl group-containing (meth)acrylate monomer is used in the polymerization of the (meth)acrylate matrix. Exemplary hydroxyl group-containing (meth)acrylate monomer include a C1 to C20 alkyl group-containing (meth)acrylic acid ester having at least one hydroxyl group such as 2-hydroxyethyl (meth)acrylate, 4-hydroxybutyl (meth)acrylate, 2-hydroxypropyl (meth)acrylate, 2-hydroxybutyl (meth)acrylate, and 6-hydroxyhexyl (meth)acrylate. As shown in the example section, the presence of even large amounts of the hydroxyl group-containing (meth)acrylate monomer (e.g., 10 or 20 phr) produces inferior adhesion and dynamic shear properties of the resulting adhesive composition.

In one embodiment, the polymer of the matrix is derived from at least 40, 50, 60, 70, or even 75 % by weight; at most 80, 85, 90, 95, 97, or even 99.5 % by weight of a C1 to C12 (meth)acrylate ester monomer relative to the other monomers. A higher amount of the C1 to C12 (meth)acrylate ester monomer relative to the other comonomers affords adequate adhesion at low temperatures (e.g., below room temperature) and/or higher debonding rates (e.g., > 12 in/min). It has been discovered that the use of large amounts of high chain length (meth)acrylate ester monomers (e.g., C18) results in a matrix with a shear modulus that is too low and is too soft to achieve the desired performance properties. Likewise, the higher carbon chain length acrylates do not have enough compatibility with the polymeric nanoparticles to increase the modulus sufficiently to improve their performance. As methacrylate ester monomers (e.g., methyl methacrylate) can increase the Tg and reduce the molecular weight of the copolymer matrix (and therefore limit performance) as compared to their acrylate counterparts (e.g., methyl acrylate), in one embodiment, the polymerizable matrix (or the matrix derived therefrom) comprises less than 10, 5, 3, 2, 1 or even 0.5 wt % or even no detectable amount of C1 to C12 methacrylate ester monomers.

Optionally, the polymer of the matrix comprises at least 0.5, 1.0, 2.5, 5, 8, or even 10 % by weight; at most 15, 18, 20, 25, 30, 35, 40, 45, or even 50 % by weight of a polar monomer relative to the other monomers present in the (meth)acrylate-based matrix.

In one embodiment, the (meth)acrylate-based matrix contains at least 1, 1.5, 2, 5, 10, 15, 20, 25, 30, or even 35 weight percent of the (meth)acrylate macromer. In one embodiment, the (meth)acrylate-based matrix contains up to 60, 55, 50, 45, 40, 30, or even 20 weight percent. The amount of (meth)acrylate macromer used is based on the total weight of polymerizable components (e.g., monomers) in the matrix.

In one embodiment, a cross-linking agent may be added at a level of at least 0.01, 0.1, 0.5, 1.0, or even 1.5 part solid; at most 2, 3, 4, 5, 6, 8, or even 10 part solid per 100 parts solid versus the weight of all of the polymerizable components used in the preparation of the (meth)acrylate-based matrix. In another embodiment, an initiator is used that will generate cross-linking in situ by abstracting hydrogens from the polymer in the matrix allowing cross-linking of the (meth)acrylate-based matrix. Typically, a cross-linking initiator is used in concentrations of at least 0.01, 0.1, 0.5, 1.0, 1.5, or even 2 part solid; at most 3, 4, 5, 6, 8, or even 10 part solid per 100 parts solid versus the weight of all of the monomers used in the preparation of the (meth)acrylate-based matrix.

In one embodiment, the polymer in the (meth)acrylate-based matrix has a weight average molecular weight of at least 100,000; 200,000; 300,000; 400,000; 500,000; 750,000; or even 1,000,000grams per mole; at most 20,000,000; 25,000,000; or even 30,000,000 grams per mole. The molecular weight of the polymer can be determined by gel permeation chromatography as is known in the art. The polymer typically has a molecular weight dispersity that can be calculated as the weight average molecular weight versus the number average molecular weight of the polymer. The inherent viscosity is related to the molecular weight of the polymer, but also includes other factors, such as concentration of the polymer. In the present disclosure, the inherent viscosity of the polymer may be at least 0.4, 0.45, 0.5, 0.6, 0.7, or even 0.8; at most 0.7, 0.8, 1.0, 1.2, 1.4, 1.6, 1.8 or even 2,3 as measured in ethyl acetate at a concentration of 0.15 grams/deciliter (g/dL).

The molecular weight of the polymer in the (meth)acrylate-based matrix may be controlled using techniques known in the art. For example, during polymerization, a chain transfer agent may be added to the monomers to control the molecular weight. Useful chain transfer agents include, for example, those selected from the group consisting of carbon tetrabromide, alcohols, mercaptans, and mixtures thereof. Exemplary chain transfer agents are isooctylthioglycolate and carbon tetrabromide. At least 0.01, 0.05, 0.1, 0.15, 0.2, 0.3, or even 0.4 parts by weight of a chain transfer agent may be used; at most 0.1, 0.2, 0.3, 0.4, 0.5, or even 0.6 parts by weight of a chain transfer agent may be used based upon 100 parts versus the weight of all of the monomers used in preparation of the (meth)acrylate-based matrix.

The (meth)acrylate-based matrix used in the adhesive of the present disclosure may be polymerized by techniques known in the art, including, for example, the conventional techniques of solventless polymerization. The polymerization of the monomers "substantially solvent free", that less than 5%, 2%, 1% or even 0.5% by weight of solvent is used based on the weight of the monomers, and more preferably no additional solvent is added during the polymerization. The term "solvent" refers both to water and to conventional organic solvents used in the industry which are volatilized in the process.

### Composite Adhesive

Described below is more detail on the preparation of the composite adhesive according to at least one embodiment of the present disclosure.

The polymerizable matrix including the (meth)acrylate macromer and the second (meth)acrylate monomer along with optional comonomers can be polymerized by various techniques, with photoinitiated bulk polymerization being preferred. An initiator is preferably added to aid in polymerization of the monomers. The type of initiator used depends on the polymerization process. In a preferred embodiment, photoinitiators are used to initiate the polymerization. Photoinitiators that are useful for polymerizing the acrylate monomers include benzoin ethers such as benzoin methyl ether or benzoin isopropyl ether, substituted benzoin ethers such as 2-methyl-2-hydroxypropiophenone, aromatic sulfonyl chlorides such as 2-naphthalenesulfonyl chloride, and photoactive oxides such as 1-phenyl-1,2-propanedione-2-(o-ethoxycarbonyl)oxime. An example of a commercially available photoinitiator is "IRGACURE 651" available from Ciba, having a formula of 2,2-dimethoxy-1,2-diphenylethane-1-one. Generally, the photoinitiator is present in an amount of about 0.005 to 1 weight percent based on the weight of the monomers. In another embodiment, a thermal initiator may be used, such as for example, AIBN (azobisisobutyronitrile) and/or peroxides. The polymerization may be carried out in the presence of at least one free-radical initiator. Useful free-radical UV initiators include, for example, benzophenones.

In a preferred practice of the disclosure, the polymeric nanoparticles are blended with the acrylic syrup (which becomes part of the (meth)acrylate-based matrix). As used herein a syrup refers to a mixture that has been thickened to a coatable viscosity, i.e., preferably between about 300 and 10,000 centipoise or higher depending upon the coating method used, and include mixtures in which the monomers are partially polymerized to form the syrup, and monomeric mixtures which have been thickened with fillers such as silicas and the like.

The composite compositions of the present disclosure (i.e., comprising the polymeric nanoparticles and the acrylate monomers or acrylic syrup used to from the (meth)acrylate-based matrix) may be irradiated with activating ultraviolet (UV) radiation having a UV A maximum in the range of 280 to 425 nanometers to polymerize the monomer component(s). UV light sources can be of various types. Low light intensity sources, such as blacklights, generally provide intensities ranging from 0.1 or 0.5 mW/cm2 (millwatts per square centimeter) to 10 mW/cm2 (as measured in accordance with procedures approved by the United States National Institute of Standards and Technology as, for example, with a UVIMAP UM 365 L-S radiometer manufactured by Electronic Instrumentation & Technology, Inc., in Sterling, VA). High light intensity sources generally provide intensities greater than 10, 15, or 20 mW/cm2 ranging up to 450 mW/cm2 or greater. In some embodiments, high intensity light sources provide intensities up to 500, 600, 700, 800, 900 or 1000 mW/cm2. UV light to polymerize the monomer component(s) can be provided by various light sources such as light emitting diodes (LEDs), blacklights, medium pressure mercury lamps, etc., or a combination thereof. The composite composition can also be polymerized with higher intensity light sources as available from Fusion UV Systems Inc., Gaithersburg, MD. The UV exposure time for polymerization and curing can vary depending on the intensity of the light source(s) used. For example, complete curing with a low intensity light course can be accomplished with an exposure time ranging from about 30 to 300 seconds; whereas complete curing with a high intensity light source can be accomplished with shorter exposure time ranging from about 5 to 20 seconds. Partial curing with a high intensity light source can typically be accomplished with exposure times ranging from about 2 seconds to about 5 or 10 seconds.

Preferably, the syrups of the invention are formed by partial polymerization of the monomers by free radical initiators, which are known in the art and can be activated by thermal energy or radiation such as ultraviolet light. In some instances, it may be preferred to add additional monomer to the syrup, as well as further photoinitiator and other additives. An effective amount of at least one free radical initiator is added to the (meth)acrylate monomers or syrup comprising the polymeric nanoparticles. The mixture is then coated onto a substrate such as a transparent polyester film, which may optionally be coated with a release coating, and exposed to UV radiation in a nitrogen rich atmosphere to form an adhesive. Alternatively, oxygen can be excluded by overlaying the coated adhesive with a second release coated polyester film and exposed to UV radiation. Subsequent exposure of the adhesive to a second source of energy can be used to cross-link or further cure the adhesive. Such sources of energy include heat, electron beam, gamma radiation, and high intensity ultraviolet lamps, such as mercury are lamps.

In one embodiment, the adhesives of the present disclosure can be prepared by combining the polymeric nanoparticles with the pre-polymerized (meth)acrylate-based matrix comprising the cross-linking agent, the free radical initiator, and optional additional components described below and then coating the mixture onto a flat substrate such as a polymeric film. In one embodiment, the plurality of polymeric nanoparticles may be predispersed in a monomeric solution (such as a (meth)acrylate ester monomer(s) and polymeric dispersant mixture) to aide dispersion of the polymeric nanoparticles into the polymerizable matrix. The coated mixture can then be exposed to an energy source, such as a UV radiation source, in a low oxygen atmosphere, i.e., less than 1000 parts per million (ppm), and preferably less than 500 ppm, until the polymerization is substantially complete, i.e., residual monomers are less than 10%, and preferably less than 5%.

Alternatively, a sufficiently oxygen free atmosphere can be provided by enclosing the polymerizable composite composition with, for example, a polymeric film. In one embodiment, the film can be overlaid on top of the coated adhesive composition before polymerization. In another embodiment, the adhesive composition is placed in receptacles, which can be optionally sealed, and then exposed to energy, such as heat or ultraviolet radiation to cross-link the adhesive. The adhesive can then either be dispensed from the receptacles for use, or the receptacles can be fed to a hot melt coater and coated onto a substrate to make tapes or other types of adhesive coated substrates (e.g., labels). In the latter case, the receptacle material should be hot melt coatable with the adhesive in the receptacle, and the receptacle material does not deleteriously affect the desired end properties of the adhesive.

The adhesive composition may comprise additional components to impact the performance and/or properties of the composition. Such additives include plasticizers, tackifiers, antistatic agents, colorants, antioxidants, pigments (e.g., carbon black), dyes, fungicides, bactericides, anti-corrosion additive (e.g., benzotriazole derivatives, n-vinyl imidazole, thioureas, 2-(dimethylamino)ethyl acrylate, coumaric acid derivatives, or combinations thereof), organic and/or inorganic filler particles, and the like. Such organic fillers include for example, pre-expanded polymeric microspheres, which may or may not include coatings with metal salts, such as DUALITE E135-040D or MFL SEVEN. Use of such additives is well known to those of ordinary skill in the art. In one embodiment, the additives are present at amounts such that the solids in the curable adhesive composition (or the cured adhesive) comprise at least 65 wt % of the (meth)acrylate-based matrix. Therefore, the total amount of additives should be less than 35, 30, 25, 20, 10, 5, or even 1 wt % of the solids. Certain additives may be of lower weight percent, e.g., a pigment may be added at less than 0.05% or even less than 0.005% by weight solids. In some embodiments, such as the instance of inorganic fillers, large amounts of the inorganic fillers may be used (for example greater than 60, 70, 80 or even 95 wt % solids).

Exemplary tackifiers include: C5-resins, terpene phenol resins, (poly)terpenes and rosin esters, hydrogenated hydrocarbons, and non-hydrogenated hydrocarbon resins. When used, the tackifiers may be added at a level of at least 5, 8, 10, or even 12 parts; and at most 15, 20, 25, or even 30 parts per 100 parts versus the weight of all of the (meth)acrylate-based matrix.

In one embodiment, the adhesive composition comprises an ionic liquid. The presence of an ionic liquid may be useful in easing the peeling (or peel-ability) of the adhesive when reworking or recycling an article. An ionic liquid is a unique salt, which is in a liquid state at about 100°C or less, has negligible vapor pressure, and high thermal stability. The ionic liquid is composed of a cation and an anion and has a melting point of generally about 100°C or less (i.e., being a liquid at about 100°C or less), about 95°C or less, or even about 80°C or less. Certain ionic liquids exist in a molten state even at ambient temperature since their melting points are less than room temperature, and therefore they are sometimes referred to as ambient temperature molten salts. The cation and/or anion of the ionic liquid are relatively sterically-bulky, and typically one and/or both of these ions are an organic ion. The ionic liquid can be synthesized by known methods, for example, by a process such as anion exchange or metathesis process, or via an acid-base or neutralization process.

The cation of the ionic liquid of the present disclosure may be a nitrogen-containing cation, a phosphonium ion, a sulfonium ion, or the like, including various delocalized heteroaromatic cations, but is not limited thereto. The nitrogen-containing cation includes such ions as, for example, alkylammonium, imidazolium, pyridinium, pyrrolidinium, pyrrolinium, pyrazinium, pyrimidinium, triazonium, triazinium, quinolinium, isoquinolinium, indolinium, quinoxalinium, piperidinium, oxazolinium, thiazolinium, morpholinium, piperazinium, and combinations thereof. Examples of the phosphonium ion include a phosphonium ion selected from the group consisting of tetraalkylphosphonium, arylphosphonium, alkylarylphosphonium and a combination thereof. Examples of the sulfonium ion include a sulfonium ion selected from the group consisting of alkylsulfonium, arylsulfonium, thiophenium, tetrahydrothiophenium, and a combination thereof. The alkyl group directly bonded to nitrogen atom, phosphorus atom, or sulfur atom may be a linear, branched or cyclic alkyl group having a carbon number of at least 1, 2, or even 4 and not more than 8, 10, 12, 15, or even 20. The alkyl group may optionally contain heteroatoms such as O and N and S in the chain or at the end of the chain (e.g., a terminal -OH group). The aryl group directly bonded to nitrogen atom, phosphorus atom or sulfur atom may be a monocyclic or condensed cyclic aryl group having a carbon number of at least 5, 6, or even 8 and not more than 12, 15, or even 20. An arbitrary site in the structure constituting such a cation may be further substituted by an alkyl group, an alkenyl group, an alkynyl group, a cycloalkyl group, an aryl group, an aralkyl group, an arylalkyl group, an alkoxy group, an aryloxy group, a hydroxyl group, a carbonyl group, a carboxyl group, an ester group, an acyl group, an amino group, a dialkylamino group, an amide group, an imino group, an imide group, a nitro group, a nitrile group, a sulfide group, a sulfoxide group, a sulfone group, a halogen atom or the like, and a heteroatom such as oxygen atom, nitrogen atom, sulfur atom and silicon atom may be contained in the main chain or ring of the structure constituting the cation.

Specific examples of the cation include N-ethyl-N'-methylimidazolium, N-methyl-N'-butylimidazolium, N-methyl-N-propylpiperidinium, N,N,N-trimethyl-N-propylammonium, N-methyl-N,N,N-tripropylammonium, N,N,N-trimethyl-N-butylammoniuim, N,N,N-trimethyl-N-methoxyethylammonium, N-methyl-N,N,N-tris(methoxyethyl)ammonium, N,N-dimethyl-N-butyl-N-methoxyethylammonium, N,N-dimethyl-N,N-dibutylammonium, N-methyl-N,N-dibutyl-N-methoxyethylammonium, N-methyl-N,N,N-tributylammonium, N,N,N-trimethyl-N-hexylammonium, N,N-diethyl-N-methyl-N-(2-methoxyethyl)ammonium, 1-propyl-tetrahydrothiophenium, 1-butyl-tetrahydrothiophenium, 1-pentyl-tetrahydrothiophenium, 1-hexyl-tetrahydrothiophenium, glycidyltrimethylammonium, N-ethylacryloyl-N,N,N-trimethylammonium, N-ethyl-N-methylmorphonium, N,N,N-trioctylammonium, N-methyl-N,N,N-trioctylammonium, N,N-dimethyl-N-octyl-N-(2-hydroxyethyl)ammonium, triethylsulfonium, trimethyl ammonium ethyl acrylate, dimethylaminoethyl methyl acrylate, or mixtures thereof.

The anion of the ionic liquid of the present disclosure may be, for example, a sulfate (R-OSO₃⁻); a sulfonate (R-SO₃⁻); a carboxylate (R-CO₂⁻); a phosphate ((RO)₂P(=O)O⁻); a borate represented by the formula: BR₄⁻, such as tetrafluoroborate
(BF₄⁻) and tetraalkylborate; a phosphate represented by the formula: PR₆⁻, such as hexafluorophosphate (PF₆⁻) and hexaalkylphosphate; an imide (R₂N⁻); a sulfonylimide; a methide (R₃C⁻); a methanide, a nitrate ion (NO₃⁻); a nitrite ion (NO₂⁻); or a halide such as iodide or chloride. In the formulas listed above, each R may be independently a hydrogen atom, a halogen atom (fluorine, chlorine, bromine, iodine), a substituted or unsubstituted alkyl, alkenyl, alkynyl, cycloalkyl, aryl, aralkyl, arylalkyl, acyl or sulfonyl group, or the like. A heteroatom such as an oxygen atom, a nitrogen atom and a sulfur atom may be contained in the main chain or ring of the group R, and a part or all of hydrogen atoms on the carbon atom of the group R may be replaced with fluorine atoms. In the case where a plurality of R's are present in the anion, these R's may be the same or different.

In some embodiments, it is advantageous to use a perfluorinated ion, such as a perfluorinated anion to achieve excellent corrosion resistance and electro-debonding. However, the use of fluorinated ions should be balanced with the environmental impact of the finished good, as some fluorinated chemicals may have restricted use due to environmental concerns. Examples of the anion containing a perfluoroalkyl group, which can be used, include a bis(perfluoroalkylsulfonyl)imide ((RfSO₂)₂N⁻), a perfluoroalkylsulfonate (RfSO₃⁻) and a tris(perfluoroalkylsulfonyl)methide ((RfSO₂)₃C⁻) (wherein Rf represents a perfluoroalkyl group). The carbon number of the perfluoroalkyl group may be, for example, from at least 1, 2, 3 or even 4 to at most 8, 10, 12, 15, or even 20. Specific examples of the bis(perfluoroalkylsulfonyl)imide include: bis(trifluoromethanesulfonyl)imide, bis(pentafluoroethanesulfonyl)imide, bis(heptafluoropropanesulfonyl)imide, biso(fluorosulfonyl)imide, and bis(nonafluorobutanesulfonyl)imide. Specific examples of the perfluoroalkylsulfonate include: trifluoromethanesulfonate, pentafluoroethanesulfonate, heptafluoropropanesulfonate and nonafluorobutanesulfonate. Specific examples of the tris(perfluoroalkylsulfonyl)methide include: tris(trifluoromethanesulfonyl)methide, tris(pentafluoroethanesulfonyl)methide, tris(heptafluoropropanesulfonyl)methide, tris(nonafluorobutanesulfonyl)methide, and a combination thereof. An example of a fluorinated anion not comprising a C-F bond is hexafluorophosphate and bis(fluorosulfonyl)imide. Ionic liquids not comprising a C-F bond include BMI PF6, BMI I, DMAEAM FAI, and DMAEAM TCM.

In some embodiments, the anion of the ionic liquid does not comprise any halogens (e.g., fluorine). One such anion is tricyanomethanide. Ionic liquids not comprising a any fluorine include BMI I, and DMAEAM TCM.

As for the ionic liquid composed of the above-described cation and anion, 1-butyl-3-methylimidazolium bis(trifluoromethanesulfonyl)imide, Tri-ethyl sulfonium bis(trifluoromethanesulfonyl)imide, 1-butyl-3-methylimidazolium hexafluorophosphate, 1-butyl-3-methylimidazolium iodide, Ethyl pyridinium bis(trifluoromethanesulfonyl)imide, Trimethyl ammonium ethyl acrylate bis(trifluoromethanesulfonyl)imide, dimethylaminoethyl acrylate methyl bis(trifluoromethanesulfonyl)imide, dimethylaminoethyl acrylate methyl bis(fluorosulfonyl)imide, dimethylaminoethyl acrylate methyl tricyano methanide, and a tetra alkyl ammonium with hydroxy functionality with bis(trifluoromethanesulfonyl)imide counterion, available under the trade designation "FC-5000" from 3M Co., Maplewood, MN, can be advantageously used as the ionic liquid, because of their excellent removability during electro-debonding due to reduced bond strength upon application of electricity.

If an ionic liquid is used, the ionic liquid in the composite adhesive may be present at at least 0.5, 1, 1.5, or even 2 wt % and at most 2.5, 3, 4, 5, 6, 7, 8, or even 9 wt %. Enough ionic liquid should be added to enable electro-debonding, while too much ionic liquid may negatively impact the physical properties of the composite adhesive, such as shear, peel adhesion, and/or ability to survive the random free fall test.

The incorporation of an ionic liquid into the composite adhesive can enable the composite adhesive to be debonded from a substrate. In one embodiment, the composite adhesive comprises low amounts or is substantially free of acid. In electrically debonding applications, as will be described below, it can be advantageous to minimize the amount of acid in the composite adhesive to prevent corrosion of the electrically conductive materials. In one embodiment, the composite adhesive comprises less than 1, 2, 3, 4, or even 5 wt % of an acidic monomer (such as acrylic acid), or even comprises no detectable acidic monomer.

The choice of the ionic liquid used in the composite adhesive can impact electr-debonding. For example, it may be advantageous to choose ionic liquids that have a high conductivity or ionic mobility. While not being limited by theory, it is believed that increased ionic liquid mobility in the adhesive is beneficial for electro-debonding. As such, it may be beneficial for the ionic liquid to be highly soluble in the adhesive matrix (i.e., the ionic liquid does not phase separate from the adhesive matrix). High mobility and high conductivity (e.g., having sheet resistance less than 1x10³ ohms per square) of the ionic liquid in the adhesive matrix could help enable electro-debonding in thicker adhesives. In some embodiments the adhesive thickness could be 10, 25, 50, 60, 70, 80, 90, 100, 150, 200, 250, 300, 400, or even up to 500 microns thick. Alternatively, or additionally, it may be advantageous to choose ionic liquids that have electrochemically unstable cations or anions. While not wanting to be limited by theory, it is believed that more electrochemically unstable cations or anions could produce an increased electro-debonding response. As such, it may be beneficial to choose cations comprised of imidazolium or pyridinium derivatives over quaternary ammonium derivatives.

In one embodiment, it may be beneficial for environmental reasons to choose ionic liquids that do not contain carbon-fluorine bonds. As such, it may be beneficial to choose ionic liquids containing inorganic fluorine such as the hexafluorophosphate or tetrafluoroborate ion in lieu of organic fluorine such as bis(trifluoromethylsulfonyl)imide.

In one embodiment, the composite adhesive disclosed herein is not a foam, meaning that the (meth)acrylate-based matrix comprises less than 5% by volume of voids, where the voids may be obtained by cells formed by gas, or due to the incorporation of hollow fillers, such as hollow polymeric particles, hollow glass microspheres or hollow ceramic microspheres.

The composite adhesives disclosed herein may advantageously be used to prepare a wide range of adhesive tapes and articles. Many of these tapes and articles contain backings or release liners used to support the layer of adhesive. As used herein a backing is a permanent support intended for final use of the adhesive article. A liner, on the other hand, is a temporary support that is not intended for final use of the adhesive article and is used during the manufacture or storage to support and/or protect the adhesive article. A liner is removed from the adhesive article prior to final use. To facilitate easy removal from the adhesive layer, the liner is typically coated with a release coating comprising a release agent. Such release agents are known in the art and are described, for example in "Handbook of Pressure Sensitive Adhesive Technology," D. Satas, editor, Van Nostrand Reinhold, New York, N.Y., 1989, pp. 585-600. In one embodiment, the release agent migrates to the surface (on the liner or release coating) to provide the appropriate release properties. Examples of release agents include carbamates, silicones and fluorocarbons. Illustrative examples of surface applied (i.e., topical) release agents include polyvinyl carbamates such as disclosed in U.S. Pat. No. 2,532,011 (Dahlquist et al.), reactive silicones, fluorochemical polymers, epoxysilicones such as are disclosed in U.S. Pat. Nos. 4,313,988 (Bany et al.) and 4,482,687 (Kessel et al.), polyorganosiloxane-polyurea block copolymers such as are disclosed in EP Pat. No. 0250248 B1 (Leir et al.), etc.

In one embodiment, the adhesive article is a double-sided tape, featuring adhesive on opposite sides of a backing layer. The adhesives (i.e., a first adhesive layer and a second adhesive layer) on the two sides may be the same or different. The backing layer may be a film, a nonwoven web, paper, or a foam as further described below. The double-sided tape may comprise one or two release liners protecting the adhesive surface not in contact with the backing layer. In one embodiment, the adhesive layer is disposed between two release liners, which may be the same or different. In another embodiment, the adhesive layer is disposed on a backing and the opposing side of the backing comprises a release agent. The adhesive article is wound upon itself such that the exposed surface of the adhesive layer (opposite the backing) contacts the release-coated backing forming, for example, a roll of tape. In yet another embodiment, the adhesive is disposed between a backing and release liner. In some embodiments, the adhesive tapes and articles do not contain a backing and therefore are free standing adhesive layers. Transfer adhesive tapes are an example of such an adhesive article. Transfer adhesives tapes, also called transfer tapes, have an adhesive layer delivered on one or more release liners. The adhesive layer has no backing within it so once delivered to the target substrate and the liner is removed, there is only adhesive. Some transfer tapes are multi-layer transfer tapes with at least two adhesive layers that may be the same or different. Transfer tapes are widely used in the printing and paper making industries for making flying splices, as well as being used for a variety of bonding, mounting, and matting applications both by industry and by consumers.

In one embodiment, the composite adhesive compositions may be easily coated upon a carrier film to produce adhesive coated sheet materials cured via ultraviolet radiation. Coating techniques known in the art may be used such as spray coating, flood coating, knife coating, Meyer bar coating, gravure coating, and double roll coating. The coating thickness will vary depending upon various factors such as, for example, the particular application or the coating formulation. Coating thicknesses of at least 10, 20, 25, 30, 40, 50, 60, 75, or even 100 µm (micrometers) and at most 125, 150, 200, 250, 300, or even 500 µm are contemplated. In some embodiments, having a thicker adhesive layer may be preferable, for example, for better impact resistance performance. However, a thicker adhesive may be more challenging to electrically debond due to more insulating character.

The carrier film may be a flexible or inflexible backing material, or a release liner. Exemplary materials useful as the carrier film for the adhesive articles of the disclosure include, but are not limited to, polyolefins such as polyethylene, polypropylene (including isotactic polypropylene and high impact polypropylene), polystyrene, polyester, including poly(ethylene terephthalate), polyvinyl chloride, poly(butylene terephthalate), poly(caprolactam), polyvinyl alcohol, polyurethane, poly(vinylidene fluoride), cellulose and cellulose derivatives, such as cellulose acetate and cellophane, and wovens and nonwovens. Commercially available carrier film include kraft paper (available from Monadnock Paper, Inc.); spun-bond poly(ethylene) and poly(propylene), such as those available under the trade designations "TYVEK" and "TYPAR" (available from The Chemours Co.); and porous films obtained from poly(ethylene) and poly(propylene), such as those available under the trade designations "TESLIN" (available from PPG Industries, Inc.), and "CELLGUARD" (available from Hoechst-Celanese). The carrier film delivers the composite adhesive of the present disclosure to the desired substrate. The carrier film may comprise on the surface opposite the composite adhesive, a pigment, indicia, text, design, etc., which is then fixedly attached to the surface of the substrate or the carrier film may be free of such pigments and/or markings.

The thickness of the composite adhesive layer is typically at least 10, 15, 20, or even 25 microns (1 mil) and at most 50, 60, 70, 80, 90, 100, or even 400 microns (16 mil) thickness. In some embodiments, the thickness of the composite adhesive layer is no thicker than 100, 150, or even 200 microns and at most 300, 500, 1000, 1500, or even 2000 microns (80 mils) thick. The adhesive can be coated in single or multiple layers.

In one embodiment, the composite adhesive of the present disclosure comprises at least 0.1, 0.3, 0.5, 1, 2, 4, 5, or even 10 grams of the plurality of polymeric nanoparticles per 100 grams of the (meth)acrylate-based matrix. In one embodiment, the composite adhesive composition comprises at most 10, 15, 20, 25, 30, 35, or even 40 grams of the plurality of polymeric nanoparticles per 100 grams of the (meth)acrylate-based matrix. In one embodiment, the plurality of polymeric nanoparticles is homogenously dispersed within the matrix, which can be visually observed by a smooth and clear composition that is free of visible clusters of particles.

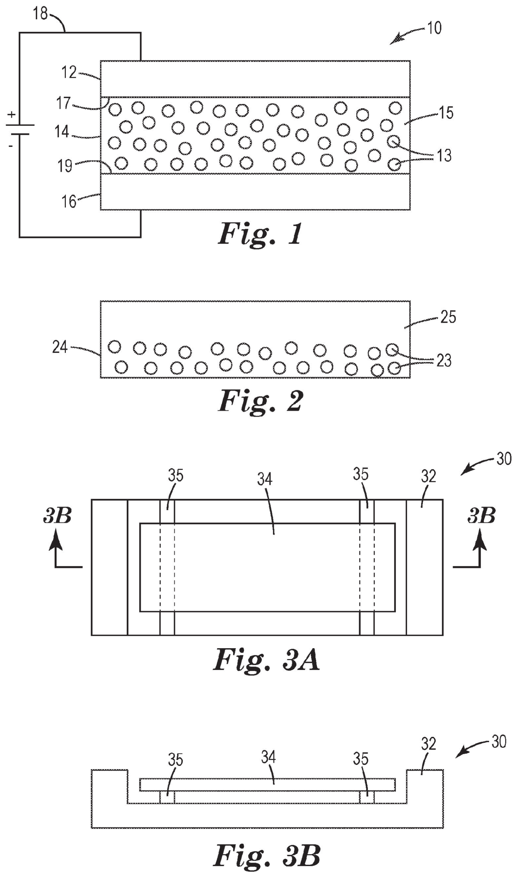

Typically, the polymeric nanoparticles are homogeneously dispersed throughout the (meth)acrylate-based matrix in layer of the adhesive as shown in Fig. 1. Fig. 1 depicts a multilayered adhesive article comprising optional first substrate 12, and second substrate 16, which may be independently an adherend, a liner, or a backing. Sandwiched therebetween is composite adhesive layer 14 comprising a plurality of polymeric nanoparticles 13 dispersed in (meth)acrylate-based matrix 15. Alternatively, the polymeric nanoparticles may be concentrated in one or more regions of a layer of the composite adhesive. For example, as shown in Fig. 2, the plurality of polymeric nanoparticles 23 in (meth)acrylate-based matrix 24 are concentrated near one major surface of composite adhesive layer 24.

In one embodiment, the composite adhesive compositions of the present disclosure are a pressure sensitive adhesive. Pressure sensitive adhesive compositions are well known to those of ordinary skill in the art to possess properties including the following: (1) aggressive and permanent tack, (2) adherence with no more than finger pressure, (3) sufficient ability to hold onto an adherend, and (4) sufficient cohesive strength. Materials that have been found to function well as pressure sensitive adhesives are polymers designed and formulated to exhibit the requisite viscoelastic properties resulting in a desired balance of tack, peel adhesion, and shear holding power.

In one embodiment, the pressure sensitive adhesive composition has a similar viscoelastic window as defined by E.P. Chang, J. Adhesion, vol. 34, pp. 189-200 (1991) such that the dynamic mechanical properties of the pressure sensitive adhesive composition as measured by well-known techniques fall within the following ranges measured at 25 °C:

G' measured at an angular frequency of 0.01 rad/s is greater than 1 x 10³ Pa; and G' measured at an angular frequency of 100 rad/s is less than 5 x 10⁶ Pa.

The (meth)acrylate-based matrix, which is the other component of the adhesive composition, plays a role of bonding between two adherends and may be tacky at ordinary temperature, or may not be initially tacky and adhesion builds over time.

In one embodiment, the composite adhesive compositions of the present disclosure are heat-activated film adhesive, wherein a film, upon heating becomes tacky (i.e., Dahlquist criterion for tack has a shear storage modulus of less than 0.3 MPa at an angular frequency of 1 Hz.

The present disclosure has identified that a composite comprising a plurality of particles dispersed within a (meth)acrylate-based matrix results in an adhesive composition having good impact resistance in resisting tensile impact forces and resistance to shear deformation. Typically, the addition of the plurality of particles increases the shear storage modulus (G') of the resulting composition. It is inferred that the increased shear storage modulus is related to the adhesives' shear resistance to deformation. In other words, the addition of the plurality of polymeric nanoparticles, makes the composite adhesive "tougher". Typically, the addition of the (meth)acrylate macromer in the composition of the present disclosure is thought to decrease the shear storage modulus and Tg of the resulting composition, enabling the resulting composite adhesive to have improved resistance to tensile debonding as demonstrated by improved performance in the Random Free Fall Testing. As shown in the example section, when a "softer" (meth)acrylate resin (i.e., a resin with a shear storage modulus below 80, or even 60 kPa) is used, the addition of the plurality of polymeric nanoparticles increases the shear storage modulus, however, the Random Free Fall testing suffers. Thus, addition of the (meth)acrylate macromer helps to balance the resistance to tensile debonding enabling these softer resins to resist both tensile impact forces and resistance to shear deformation.

In one embodiment, the composite adhesives disclosed herein have a shear storage modulus (G') at 25 °C and 1 Hz of at least 100, 150, 200, 300, or even 400 kPa (kiloPascals).

In one embodiment, the composite adhesives disclosed herein have a peak stress in dynamic shear testing of at least 0.5, 0.7, 0.8, or even 0.9 MPa; and at most 2.0, 1.8, 1.7, 1.6, 1.5, 1.4, 1.3, 1.2, 1.1, or even 1.0 MPa.

In one embodiment, the composite adhesives disclosed herein, when assembled as tested as disclosed in the Random Free Fall Testing are dropped at 1 meter 50 times, the sample did not fail. In yet another embodiment, the composite adhesives disclosed herein, when assembled as tested as disclosed in the Random Free Fall Testing are dropped at 1 meter 100 times, the sample did not fail. In another embodiment, the composite adhesives disclosed herein, when assembled as tested as disclosed in the Random Free Fall Testing are dropped at 1 meter 250 times, the sample did not fail.

In one embodiment, the composite adhesives according to the present disclosure not only have good adhesion to substrates having a high surface energy, but also demonstrate good adhesion to low surface energy substrates. In one embodiment, the adhesive of the present disclosure has a peel value greater than 0.4, 0.5, 0.6, or even 0.8 N/mm when tested according to ASTM D 3330/D3330M on a stainless steel substrate with an adhesive thickness of 8 mils (200 micrometers) when laminated and peeled at room temperature. The peel strength may be adjusted based on the required application, with some applications requiring a higher peel strength (for example from at least 0.5, 0.6, 0.7, or even 0.8 N/mm and at most 2.5, 2.2, 2.1, or even 2.0 N/mm).

In one embodiment, the composite adhesives disclosed herein are optically clear. In one embodiment, the difference between the refractive index of the plurality of polymeric nanoparticles and the refractive index of the (meth)acrylate-based matrix is less than 0.2, 0.1, or even 0.05. The refractive index can be determined by using techniques known in the art. For example, the Becke Line Method wherein certified refractive test liquids are used along with a microscope to determine the refractive index of a material or the refractive index may be determined by using a refractometer and measuring the bend of a wavelength of 589 nm (sodium D line) at 25 °C in air.

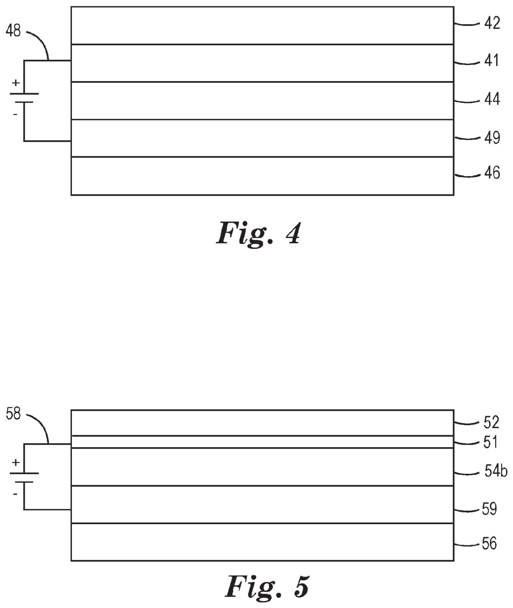

In one embodiment, the composite adhesives disclosed herein comprising an ionic liquid can undergo electrically induced adhesive debonding, wherein the composite adhesive can be debonded on demand with the application of a voltage across the adherend substrates. Although not wanting to be limited by theory, it is believed that when a voltage is applied to the composite adhesive comprising an ionic liquid, electrolysis of the ionic liquid occurs, wherein the cations migrate toward the cathode side and the anions migrate toward the anode side, thereby weakening the adhesive interface. Typically to perform the electro-debonding, the composite adhesive comprising the ionic liquid should be positioned between two electrically conductive surfaces. For example, in one embodiment, both first substrate 12 and second substrate 16 in Fig. 1 comprise an electrically conductive material to form an anode and a cathode, respectively, to conduct the electro-debonding. If the substrate is not electrically conductive or has low electrical conductivity (for example, having a sheet resistance of at least 1x10³ or even 5x10³ ohms per square), then another layer, such as a conducting coating should be used to enable the electrical debonding. Such a schematic is shown in Fig. 4, where composite adhesive layer 44 is disposed between first substrate 42 and second substrate 46. First electrically conductive layer 41 is positioned between first substrate 42 and composite adhesive layer 44 while second electrically conductive layer 49 is positioned between second substrate 46 and composite adhesive layer 44. The first electrically conductive layer and the second electrically conductive layer, may or may not be the same material. The electrically conductive layer could be a coating or a layer. In yet another embodiment, the electrically conductive layer is disposed within the composite adhesive layer as shown in Fig. 5. For example, in Fig. 5, first electrically conductive layer 51 is positioned between the composite adhesive layers 54a and 54b, while second electrically conductive layer 59 is positioned opposite composite adhesive layer 54b.

To perform debonding on demand, the electrically-conductive surfaces (e.g., first electrically conductive layer 41 and second electrically conductive layer 49) are electrically coupled to or in electrical communication with a power source in a closeable electrical circuit. The power source may be a direct current power supply that provides a DC voltage in the range of about 3V to 250V, although other variations are contemplated. The amount of voltage applied can also be dictated by the amount of time (for example 0.1, or 1 to 5 minutes) the voltage is applied. For example, a higher voltage may be applied for a short amount of time. Electrical potential is applied between the two opposing electrically conductive surfaces (e.g., first electrically conductive layer 41 and second electrically conductive layer 49) in order to de-bond composite adhesive 44 from one or both of the electrically conductive surfaces, enabling the separation of first substrate 42 and second substrate 46. For example, while not intending to be bound by any particular theory, it is believed that a movement of ions within the composite adhesive may be affected by application of the electrical potential thereto. Upon a sufficient amount of movement being affected, e.g., sufficient ionic components appear adjacent to the electro-conductive surface, the adhesive qualities of the adhesive material is reduced, enabling separation of the electro-conductive surfaces and/or composite adhesive.

Exemplary conductive materials include: an electrically conductive carbonaeceous material or an electrically conductive metal. The electrically conductive surface may comprise a conventional material such as a metal, mixed metal, alloy, metal oxide, and/or composite metal oxide, or it may include a conductive polymer. Examples of suitable metals for the electrically conductive layer include the Group 1 metals, the metals in Groups 4, 5, and 6, and the Group 8-10 transition metals. Further examples of suitable metals for the electrically conductive layer include stainless steel, Al, Ag, Mg, Ca, Cu, Mg/Ag, LiF/Al, CsF, and/or CsF/Al and/or alloys thereof.

In some embodiments, the composite adhesive compositions described herein are suitable for bonding internal components or external components of illuminated display devices such as liquid crystal displays ("LCDs") and light emitting diode ("LEDs") displays such as cell phones (including Smart phones), wearable (e.g. wrist) devices, car navigation systems, global positioning systems, depth finders, computer monitors, notebook and tablet computer displays or bonding items (e.g., handles, display holders) to the exterior of electronic devices.

### EXAMPLES

Advantages and embodiments of this disclosure are further illustrated by the following examples, but the particular materials and amounts thereof recited in these examples, as well as other conditions and details, should not be construed to unduly limit this invention. In these examples, all percentages, proportions and ratios are by weight unless otherwise indicated.

All materials are commercially available, for example from Sigma-Aldrich Chemical Company; or known to those skilled in the art unless otherwise stated or apparent.

These abbreviations are used in the following examples: °C = degree Celsius, cP =CentiPoise, g = gram, lb = pound, kg = kilograms, mL = milliliter, mol = mole, min = minutes, cm = centimeter, Hz = Hertz, J = Joule, kDa = kiloDalton, L = liter, mm = millimeter, mW = milliWatt, N = Newton, nm = nanometer, Pa = Pascal, rpm = revolutions per minute, ppm = parts per million, and wt = weight.

**Table 1. Materials used to prepare examples.**

| Abbreviation | Description and Source |
|---|---|
| 2-EHA | 2-Ethylhexyl acrylate, obtained from BASF, Ludwigshafen, Germany |
| IBOA | Isobornyl acrylate, obtained from San Esters, New York, NY |
| C18A | C18 Guerbet alcohol derived acrylate, which can be synthesized according to method 1 of U.S. Pat. No. 8,137,807 (Clapper, et al.) |
| AA | Acrylic acid, obtained from BASF, Ludwigshafen, Germany |
| NNDMA | N, N-dimethylacrylamide, obtained from TCI America, Portland, OR |
| NVP | N-vinylpyrrolidone, obtained from TCI America, Portland, OR, USA |
| HDDA | 1,6-Hexanediol diacrylate, obtained from Arkema, Paris, France |
| 2-MBA | 2-Methylbutyl acrylate, can be obtained from Monomer Polymer & Dajac Labs, Ambler, PA |
| nBA | n-butyl acrylate, obtained from BASF, Ludwigshafen, Germany |
| toACM | Tert-octylacrylamide, obtained from Nouryon, Amsterdam, Netherlands |
| HEA | Hydroxy ethyl acrylate, obtained from BASF, Ludwigshafen, Germany |
| PEG-A | Poly(ethylene glycol)-methyl ether acrylate, Mn = 550 Da obtained from Sans Esters, Osaka, Japan |
| PTHF-A | Poly(tetrahydrofuran)-methyl ether acrylate, Mn = 2 kDa, prepared as in PCT Publ. No. WO2022/043784 A1 (Schneiderman et al.), synthetic route 1. |
| HBA | 4-hydroxybutyl acrylate, obtained from BASF, Ludwigshafen, Germany |
| XT100 | A methylmethacrylate-butadiene-styrene (MBS) core-shell toughening nanoparticle with an average particle size of less than 200 nm, obtained under the trade designation "CLEARSTRENGTH XT100" from Arkema, Paris, France |
| M731 | A core/shell type methacrylate-butadiene-styrene copolymer nanoparticle with a multi-layer structure, obtained under the trade designation "KANE ACE M-731" from Kaneka Americas Holding, Inc., Pasadena, TX |
| B564 | Core-shell rubber with a poly(methyl methacrylate) shell and a poly(butadiene-co-styrene) core, and an average particle size of 100 nm, obtained under the trade designation "KANE ACE B-564" from Kaneka Americas Holding, Inc., Pasadena, TX |
| MX500 | Poly(methyl methacrylate) microparticles with a monodisperse average particle size of 5000 nm diameter, obtained under part number "MX-500" from Soken Chemical Asia Co., Ltd., Ban Kao, Thailand |
| W300 | Core-shell acrylic specialty copolymer nanoparticle, obtained under the trade designation "CLEARSTRENGTH W-300" from Arkema, Paris, France |
| IRG 651 | 2,2-dimethoxy-2-phenylacetophenone, obtained under the trade designation "IRGACURE 651", obtained from Ciba Specialty Chemicals, Basel, Switzerland |
| EMS | Low-density, polymeric microspheres coated with calcium carbonate, obtained under the trade designation "DUALITE E135-040D" from Chase Corporation, Westwood, MA |
| MFL | Low-density, polymeric microspheres coated with inorganic metal salts, obtained under the trade designation "MFL SEVEN" from Matsumoto Yushi Seivaku, JP |
| CB-1 | Carbon black dispersion with about 30 wt% carbon black, obtained under the product number 9B2558 from Penn Color, Doylestown, PA |
| CB-2 | Carbon black dispersion with about 30 wt% carbon black, obtained under the product number 9B2084 from Penn Color, Doylestown, PA |
| BMI TFSI | 1-butyl-3-methylimidazolium bis(trifluoromethanesulfonyl)imide, obtained from Sigma Aldrich |
| FC-5000 | tetra alkyl ammonium with hydroxy functionality with bis(trifluoromethanesulfonyl)imide counterion, obtained from 3M Company, St. Paul, MN, USA under the trade designation "3M IONIC LIQUID ANTISTAT FC-5000" |
| TES TFSI | Tri-ethyl sulfonium bis(trifluoromethanesulfonyl)imide, obtained from TCI America, Portland, OR, USA |
| BMI PF6 | 1-butyl-3-methylimidazolium hexafluorophosphate, obtained from Sigma Aldrich |
| BMI I | 1-butyl-3-methylimidazolium iodide, obtained from Sigma Aldrich |
| EP TFSI | Ethyl pyridinium bis(trifluoromethanesulfonyl)imide, synthesized as in Lamanna et al., U.S. Pat. No. 6,372,829 B1 |
| DMAEAM TFSI | Dimethylaminoethyl acrylate methyl bis(trifluoromethanesulfonyl)imide, synthesized as in Klun et al., U.S. Pat. No. 11,111,392 B2 |
| DMAEAM FSI | Dimethylaminoethyl acrylate methyl bis(fluorosulfonyl)imide, synthesized herein. |
| DMAEAM TCM | Dimethylaminoethyl acrylate methyl tricyano methanide, synthesized herein. |
| DMAEAM Cl | Dimethylaminoethyl acrylate methyl chloride, obtained as 80 wt.% in water as ADAMQUAT MC 80 from Arkema. |
| Li FSI | Lithium bis(fluorosulfonyl)imide, obtained from Combi Blocks, San Diego, CA, USA |
| Na TCM | Sodium tricyanomethanide, obtained from Comb-Blocks, San Diego, CA, USA |
| RF02N | Silicone coated polyester release liner, 2 mil (51 micrometers) thick, available under the trade designation "RF02N" from SKC Haas Display Films LLC, Seoul, KR |
| RF12N | Silicone coated polyethylene terephthalate release liner, 2 mil (51 micrometers) thick, available under the trade designation "RF12N" from SKC Haas Display Films LLC, Seoul KR, wherein the RF02N has a lower release force (i.e., easier to remove) than the RF12N. |

### Test Methods

### Rheology and Glass Transition Temperature

Both the RF02N and RF12N liners were removed from the transfer tape samples and the composite adhesive was tested on a TA Instruments discovery hybrid rheometer III (DHR-3), (New Castle, DE). The sample was heated from room temperature up to 40°C at a rate of 3 °C/min then cooled to -50°C at a rate of 3 °C/min, warming up to 20°C and then heating the sample from 20°C to 140°C at a rate of 3°C/min. The data was collected during the second heating cycle at oscillatory frequencies of 1 Hz with strain values in the linear viscoelastic regime (typically 1-5%). The glass transition temperature (at 1 Hz) was determined as the peak of the tan(δ) curve from the rheology plot of G' and G" (y axis -1) versus temperature (°C), (x axis) and tan(δ) (y axis-2). The peak (i.e., highest value) in tan(δ) was selected from y axis-2, and the corresponding temperature on the x axis was selected as the glass transition temperature. Tan(δ) is an abbreviation for the tangent of the phase angle between the stress and strain oscillation waves in the shear rheology oscillation plot. Samples that passed the rheology requirements had a shear storage modulus (G') of > 100 kPa at 25°C.

### Size Exclusion Chromatography (SEC)

The molecular weight (both number average, Mn, and weight average, Mw) and polydispersity were determined using size exclusion chromatography with polystyrene standards. The chromatography system included an instrument available under the trade designation "ACQUITY" (Waters Corporation, Milford, MA) and the following columns in order (going downstream): Styragel guard column (20 µm, 4.6 mm X 30 mm) and a first Styragel HR 5E column (mixed bed, 5µm, 7.8 mm X 300 mm, 2K - 4M) and a second Styragel HR 5E column (all columns are available from Waters Corporation). Analysis was done using a THF mobile phase at flow rate of 1 mL/min.

### Peel Adhesion Testing

For all peel adhesion testing, the RF02N release liner was removed from the transfer tape sample, and the exposed adhesive side of the transfer tape was contacted to the plasma treated side of a 6 inch (15 cm) wide plasma treated polyester film (3M Co., 2-mil (50-µm) biaxially oriented PET film whose surface had undergone plasma treatment conditions described in U.S. Pat. No. 10,134,566 (David et al.)). Then, a 6 inch (15 cm) rubberized hand roller (Polymag Tek, NY) was rolled by hand over the construction ensuring no air bubbles were trapped between the adhesive and the primed polyester film. Peel adhesion was measured at an angle of 180 degrees. Peel adhesion testing was performed on annealed 18 gauge, 304 stainless steel (SS) test panel from Chem. Instruments, Fairfield, OH. The RF12N release liner was removed from the tapes on PET backings and the exposed adhesive side was laminated directly to the 2- inch x 6-inch (5.08 cm x 15.24 cm) stainless steel test panel using a weighted rubberized (4.5 lb, 2.04 kg) hand roller with 4 repetitions of 3 second roll downs. The transfer tape, stainless steel test panel, and the transfer tape applied to the stainless steel test panel were conditioned in a controlled temperature and humidity (CTH) room (set at 23 °C, 50% RH (relative humidity)) prior to peel testing. SS test panels were cleaned with methyl ethyl ketone (MEK) before and after testing. Peel testing was done using an SP-2100 iMass (iMass Inc., Accord, MA USA) at a rate of 12 inches/min (0.3 m/min). Each sample was peeled at least three times from the same substrate and averages of all three measurements are reported. The peel adhesion force and the failure mode were recorded. All of the samples exhibited adhesive failure (i.e., break between the adhesive and the SS panel), except for the sample marked, which broke between the adhesive and the polyester film.

### Dynamic Shear Testing

For dynamic shear testing, a modified version of 'ASTM D1002-2019 - Apparent Shear Strength of Single-Lap-Joint Adhesively Bonded Metal Specimen' was used. Shear of the adhesive was tested between the ends of two overlapped 304 stainless steel (SS) panels (1 inch (2.5 cm) wide x 4 inches (10.1 cm) long x 1/16 inch (1.6 mm) thick), with an overlap adhesive bonded region of 1 inch (2.5 cm)) by 1 inch (2.5 cm)). To prepare the test specimens, 1 inch (2.5 cm) by 1 inch (2.5 cm) square sample of the designated transfer tapes were cut and the RF02N liner was removed and the exposed adhesive side of the transfer tape was laminated at room temperature to the end of the one of the SS panels. Then the RF12N liner was removed from the transfer tape bonded to the first SS panel, and the exposed adhesive was bonded to the second SS panel ensuring an overlap area of 1 inch (2.5 cm) by 1 inch (2.5 cm)). The bonded laminate was then weighed down with a 50 lb (22.7 kg) weight applied over the 1 inch (2.5 cm) by 1 inch (2.5 cm) adhesive bonded area at room temperature for 30 s and allowed to dwell at room temperature for a minimum of 1 day. The adhesive joint was tested after dwell time by gripping the opposite ends of the stainless steel substrates within a load frame (MTS, Eden Prairie, MN) and tested at a rate of displacement of 10 mm/min (vertical crosshead speed). The maximum peak in the stress of the stress strain curve was used to determine the peak stress of the adhesive specimen in the dynamic shear test.

### Random Free Fall Testing

Random free fall testing was performed on a Heina Tumble Tester II (Heina, Halikko, Finland) with test specimen 30 as shown in Figs. 3A (top view) and 3B (cross sectional view). As shown in Fig. 3 A, polycarbonate panel 34 is adhered to test buck 32 using two adhesive stripes 35. The adhesive stripes were 2 mm wide. The polycarbonate test buck (available from Chem Instruments, Fairfield, OH, USA) was 6.25 inches (15.8 cm)) long x 3.25 inches (8.3 cm) wide x 0.375 inches (9.5 mm)) thick at the base. The test buck had a raised portion (about 0.25 inches (0.63 cm) high from the base) along each short side edge which was designed to come in contact with the tumble tester surfaces and to prevent direct contact with the polycarbonate panel and the tumble tester surfaces. The polycarbonate panel was 5.125 inches (13 cm)) long x 2.875 inches (73 cm) wide x 0.125 inches ((3.2 mm) thick. The test specimens were prepared as follows. The adhesive transfer tape was cut to 3.25 inches (8.3 cm) long x 2 mm wide using a 2 mm wide tape slitter. The RF02N release liner was removed from each strip of transfer tape and the exposed adhesive side was laminated to the test buck such that the adhesive was placed 1 inch (2.5 cm)) parallel from each opposite edge of the test buck. Then the RF12N liner was removed from each adhesive strip and the polycarbonate panel was laminated onto the test buck using the adhered adhesive strips, ensuring that the panel was a fixed distance away from each raised portion of the test buck. A 4 kg weight was placed over the length of each adhered strip of the adhesive tape and a third 4 kg weight was placed on top of the two other weights. The weights were dwelled on the tapes for 30 s and then the bonded test specimens placed into a CTH room for 3 days. The bonded test specimens were then placed into the Heina tumble tester and was repeatedly dropped from a height of 1 m at a rate of 12 drops per minute. Drops prior to failure (as indicated by pop off from one or both sides of the polycarbonate panel from the polycarbonate test buck) were counted. Samples were dropped 250 times. A result of 250 means the sample survived 250 drops.

### Corrosion Testing

To prepare the test specimens, 1 inch (2.5 cm) by 1 inch (2.5 cm) square sample of the designated transfer tapes were cut and the RF02N liner was removed and the exposed adhesive side of the transfer tape was laminated at room temperature to a 2 mil (50 micrometers)- thick polyethylene terephthalate (PET) panel. Then the RF12N liner was removed from the transfer tape bonded to the PET panel, and the exposed adhesive was hand rolled down to a copper foil sheet. The test specimens were placed in an oven set at 65 °C and at 90 % relative humidity (RH). The specimens were removed from the oven on Day 1, Day 3, and Day 7 and evaluated for signs of corrosion (discoloration of the copper foil). The specimens were then scored on a scale 1-3 where 1 = no sign of corrosion, 2 = less than or equal to 25% of the copper foil area has corrosion and 3 = more than 25% of the copper foil area has visible corrosion.

### Electro-debonding

A tensile pushout setup was used comprising a stainless steel coupon (40mm x 40mm x 3mm) containing a circular hole (diameter= 24 mm) in the center and a circular stainless steel puck (diameter = 33mm, 3 mm thick). The designated transfer tapes were die cut into a ring having an outer diameter of 31 mm and an inner diameter of 26 mm. The RF02N liner was removed and the exposed adhesive side of the transfer tape ring was laminated around the circular hole on the stainless steel coupon. Then the RF12N liner was removed from the transfer tape bonded to the coupon and the exposed adhesive was bonded to the stainless steel puck such that the puck covered the hole in the coupon. The test specimens were weighed down with an 8 kg weight for 30 seconds at 23°C and then removed. The test specimens then were dwelled at 23 °C/ 50% RH for at least 2 days before testing. Then, a power source (1685B series available from B&K Precision, Yorba Linda, CA) was connected to the pushout setup, with the positive electrode connected to puck and the negative electrode connect to the coupon. A voltage of 50 volts was applied across the coupon and puck for 180 seconds unless otherwise indicated. Immediately following the 180 seconds of applied voltage, the electrodes were disconnected from the test specimen and the test specimen was loaded onto an electromechanical tester (MTS Criterion Model C43, Eden Prairie, MN). The stainless steel coupon was held in place while a 0.75 inch (19 millimeter)-diameter rod from the electromechanical tester was positioned through the circular hole of the stainless steel coupon, contacting the circular stainless steel puck. The electromechanical tester was used to push the puck away from the coupon at a rate of 10 mm/min under ambient conditions. The peak stress required to remove the puck from the coupon was recorded in MPa (mega Pascals). Test specimens where no voltage was applied were also tested in this way. Reported in Table 11 is the Initial push out peak stress (i.e., when no voltage was applied prior to testing) and the % reduction in the push out peak stress after applying 50 volts across the test specimen for 3 minutes (or 180 seconds).

### Syrup Polymer Preparation

Syrups SRP-1 to SRP-3 were synthesized by adding the monomers (as specified in Table 2) together at the appropriate wt% loadings, adding IRG 651 (0.02 grams per 100 grams of total monomers ) and exposing the monomer solution to 0.3 mW/cm2 UV-LED irradiation (365 nm) until the mixture had a higher viscosity (about 1,000 cP). Shown in Table 3 is the molecular weight in megaDaltons (MDa) and the polydispersity of the resulting syrups as determined by the SEC Test Method described above.

**Table 2. Monomer Compositions Used in Making Syrup Polymers in wt. %**

| Syrup | 2-EHA | 2-MBA | C18A | HBA | nBA | NNDMA | toACM | NVP | AA | HDDA |
|---|---|---|---|---|---|---|---|---|---|---|
| SRP-1 | 35 | 35 | - | - | - | 25 | 5 | - | - | - |
| SRP-2 | - | - | 98 | - | - | 2 | - | - | - | - |
| SRP-3 | 80 | - | - | 20 | - | - | - | - | - | - |
| SRP-4 | 90 | - | - | - | - | - | - | - | 10 | - |
| SRP-5 | - | - | - | - | 90 | - | - | - | 10 | - |
| SRP-6 | 70 | - | - | - | - | - | - | 30 | - | - |
| SRP-7 | - | - | - | - | 70 | - | - | 30 | - | - |
| SRP-8 | - | - | - | - | 80 | - | - | 20 | - | - |
| SRP-9 | 65 | - | - | - | - | 30 | 5 | - | - | 0.02* |

| | | | | | | | | | | |
|---|---|---|---|---|---|---|---|---|---|---|
| *added as phr (amounts in parts per hundred resin relative to 100 parts of the total amount of other monomers). | | | | | | | | | | |

### Synthesis of imethylaminoethyl acrylate methyl bis(fluorosulfonyl)imide.

### (DMAEAM FSI)

DMAEAM Cl (125 g of 80 wt.% in water, 516 mmol of monomer) was added to a round bottom flask equipped with a polytetrafluorethylene-coated stir bar. Then, the solution was diluted with 100 g of water and Li FSI (100 g, 533 mmol) was slowly added to the solution while stirring. An organic phase formed and separated from the water phase as the Li FSI was added. After 24 hours, the organic phase was separated from the aqueous phase using a separatory funnel. The organic phase was washed with water (3 x 100 mL). The organic phase was dried by rotary evaporation to yield 85.2 g of DMAEMAM FSI.

Synthesis of dimethylaminoethyl acrylate methyl tricyanomethanide (DMAEAM TCM)

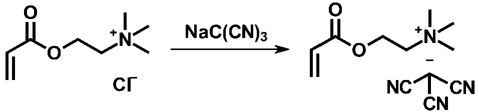

DMAEAM Cl (50 g of 80 wt.% in water, 206.5 mmol of monomer) was added to a round bottom flask equipped with a polytetrafluorethylene-coated stir bar. Then, the solution diluted with 100 g of water, and Na TCM (23.4 g, 206.5 mmol) was slowly added to the solution while stirring. After 14 days of stirring, the solution was added to 3.5 L of acetone to precipitate NaCl. The solution was allowed to stand overnight and then filtered through celite. Removal of the acetone via rotary evaporation yielded a yellow liquid. ¹H-NMR (500 MHz; acetone-d₆): δ 6.42 (dd, *J =* 17.3, 1.3 Hz, 1H), 6.21 (dd, *J =* 17.3, 10.5 Hz, 1H), 5.97 (dd, *J =* 10.5, 1.3 Hz, 1H), 4.72 (dq, *J* = 7.2, 2.5 Hz, 2H), 3.99-3.97 (m, 2H), 3.44 (s, 9H). 13-C NMR (126 MHz; Acetone): δ 164.8, 131.7, 127.8, 120.9, 64.9, 58.0, 53.7, 4.8 Nuclear Magnetic Resonance (NMR) was performed on a Bruker 500 MHz using acetone-d6 as a solvent. Samples were prepared at a concentration of 10 wt.%. For 1-H NMR, acetone was referenced to 2.05 ppm. For 13-C NMR, acetone was referenced at 29.84 ppm.

**Table 3. Molecular Weight Data of Resulting Syrup Polymers from Table 2**

| Syrup | Mₙ (MDa) | M_{w} (MDa) | Polydispersity Index |
|---|---|---|---|
| SRP-1 | 0.35 | 1.0 | 2.9 |
| SRP-2 | † | | |
| SRP-3 | † | | |
| SRP-4 | 0.43 | 1.1 | 2.6 |
| SRP-5 | 0.83 | 1.8 | 2.2 |
| SRP-6 | 0.59 | 1.0 | 1.8 |
| SRP-7 | 0.43 | 0.8 | 1.8 |
| SRP-8 | 0.95 | 1.4 | 1.5 |
| SRP-9 | NT | | |

| | | | |
|---|---|---|---|
| † molecular weight (M_{w}) was greater than 8 million g/mol, sample was outside of the calibration standards. NT = not tested. | | | |

### Examples 1-11 (E1-E11) and Comparative Examples 1-10 (CE1-CE10)

Curable compositions were made using the components as listed in Table 4. The designated syrup was used at 100 parts and the rest of the components were added at the amounts listed (for example, 5 g of PEG-A was added to 100 g of SRP-1 in E1).

Then each curable composition was coated between two release liners (RF12N and RF02N). The samples then were cured under 405 nm UV-LED lights with a total dosage of 3.1 J/cm2 as measured with a radiometer equipped with a high power sensing head (available under the trade designation "POWER PUCK II" from EIT Incorporated, Sterling, VA), resulting in transfer tapes, which had an adhesive layer thickness of 8 mils (200 µm).

**Table 4.**

| Sample | Syrup | PEG-A | XT100 | M731 | B564 | W300 | MX500 | EMS | MFL | AA | CB-1 | CB-2 | HDDA | IRG 651 |
|---|---|---|---|---|---|---|---|---|---|---|---|---|---|---|
| | | (Amounts in parts per hundred resin relative to 100 parts of syrup) | | | | | | | | | | | | |
| E1 | SRP-1 | 5 | 5 | | | | | 1 | | 0.5 | 1.5 | | 0.07 | 0.2 |
| E2 | SRP-1 | 5 | 10 | | | | | | | | 1.5 | | 0.07 | 0.2 |
| E3 | SRP-1 | 5 | 20 | | | | | 1 | | | 1.5 | | 0.07 | 0.2 |
| E4 | SRP-1 | 7.5 | 20 | | | | | | | | 1.5 | | 0.05 | 0.2 |
| E5 | SRP-1 | 10 | 20 | | | | | | | | 1.5 | | 0.05 | 0.2 |
| E6 | SRP-1 | 10 | 20 | | | | | 1 | | | 1.5 | | 0.07 | 0.2 |
| E7 | SRP-1 | 15 | 10 | | | | | | | | | | 0.1 | 0.2 |
| E8 | SRP-1 | 15 | 20 | | | | | | | | | | 0.1 | 0.2 |
| E9 | SRP-1 | 5 | | 10 | | | | 1 | | | 1.5 | | 0.1 | 0.2 |
| E10 | SRP-1 | 5 | | | 10 | | | 1 | | | 1.5 | | 0.1 | 0.2 |
| E11 | SRP-1 | 10 | | | | 15 | | 1 | | | | | 0.1 | 0.2 |
| CE1 | SRP-1 | | 10 | | | | | | | | | | 0.1 | 0.2 |
| CE2 | SRP-1 | | 20 | | | | | | | | | | 0.1 | 0.2 |
| CE3 | SRP-1 | | | | | | | | | | | | 0.1 | 0.2 |
| CE4 | SRP-1 | | 15 | | | | | | | | | | 0.1 | 0.2 |
| CE5 | SRP-2 | | | | | | | | | | | | 0.1 | 0.2 |
| CE6 | SRP-2 | | 10 | | | | | | | | | | 0.1 | 0.2 |
| CE7 | SRP-2 | 10 | 10 | | | | | | | | | | 0.1 | 0.2 |
| CE8 | SRP-3 | 10 | 5 | | | | | | | | | | 0.1 | 0.2 |
| CE9 | SRP-3 | 15 | 10 | | | | | | | | | | 0.1 | 0.2 |
| CE10 | SRP-1 | 15 | | | | | 20 | | | | 1 | | 0.1 | 0.2 |
| E22 | SRP-9 | 2 | 0.5 | | | | | | 2.5 | 1 | | 0.1 | 0.07 | 0.5 |
| E23 | SRP-9 | 5 | 1 | | | | | | 5 | 1 | | 0.1 | 0.07 | 0.5 |

**Table 5. Rheological Properties of the Adhesive Compositions**

| Sample | Rheology Temperature Ramp (1 Hz, 3 °C/min, <5% strain) | | |
|---|---|---|---|
| | T_{g} (°C) | G' 25 °C (kPa) | G' 85 °C (kPa) |
| E1 | -5 | 187 | 52 |
| E2 | -7 | 265 | 59 |
| E3 | -9 | 700 | 112 |
| E4 | -9 | 613 | 100 |
| E5 | -11 | 543 | 91 |
| E6 | -13 | 542 | 87 |
| E7 | -16 | 187 | 43 |
| E8 | -17 | 383 | 66 |
| E9 | -8 | 318 | 66 |
| E10 | -7 | 156 | 52 |
| E11 | -11 | 149 | 36 |
| CE1 | -1 | 404 | 83 |
| CE2 | -3 | 755 | 139 |
| CE3 | +1 | 144 | 24 |
| CE4 | -15 | 65 | 20 |
| CE5 | -65 | 6 | 2 |
| CE6 | -55 | 13 | 6 |
| CE7 | -52 | 11 | 5 |
| CE8 | -44 | 71 | 56 |
| CE9 | -46 | 118 | 70 |
| CE10 | -15 | 103 | 33 |
| E22 | +3 | 239 | 43 |
| E23 | +2 | 208 | 40 |

**Table 6. 180 Degree Peel Adhesion, Dynamic Shear, and Random Free-Fall Data of Transfer Tapes**

| Sample | SS Peel Adhesion (N/mm) | Random Free Fall (drops until failure, max. 250) | SS Dynamic Shear (MPa) |
|---|---|---|---|
| E1 | 1.21 | 113 | 0.79 |
| E2 | 1.00 | 85 | 1.25 |
| E3 | 0.92 | 250 | 1.45 |
| E4 | 1.00 | 150 | 1.30 |
| E5 | 0.99 | 250 | 1.03 |
| E6 | 0.88 | 250 | 1.21 |
| E7 | 0.81 | 250 | 0.89 |
| E8 | 0.83 | 250 | 0.97 |
| E9 | 0.50 | 250 | 0.51 |
| E10 | 1.02 | 250 | 0.89 |
| E11 | 1.63 | 250 | 0.74 |
| CE1 | 1.11 | 4 | 1.05 |
| CE2 | 0.89 | 6 | 1.25 |
| CE3 | 1.94 | 1 | 0.64 |
| CE4 | 1.10 | 250 | 0.72 |
| CE5 | NT | NT | 0.04 |
| CE6 | 0.20 | NT | NT |
| CE7 | 0.06 | NT | 0.02 |
| CE8 | 0.13 | 1 | 0.21 |
| CE9 | 0.10 | 10 | 0.27 |
| CE10 | 0.84 | 250 | 0.40 |
| E22 | 1.56 | 250 | 1.32 |
| E23 | 1.77 | 250 | 1.48 |

| | | | |
|---|---|---|---|
| NT = not tested | | | |

**Table 7. Summary of Test Results**

| Sample | Shear Modulus (25 °C, 1 Hz) (G' > 100 kPa) | SS Peel Adhesion (> 0.5 N/mm) | Random Free Fall (>50 drops) | SS Dynamic Shear (> 0.5 MPa) |
|---|---|---|---|---|
| E1 | Pass | Pass | Pass | Pass |
| E2 | Pass | Pass | Pass | Pass |
| E3 | Pass | Pass | Pass | Pass |
| E4 | Pass | Pass | Pass | Pass |
| E5 | Pass | Pass | Pass | Pass |
| E6 | Pass | Pass | Pass | Pass |
| E7 | Pass | Pass | Pass | Pass |
| E8 | Pass | Pass | Pass | Pass |
| E9 | Pass | Pass | Pass | Pass |
| E10 | Pass | Pass | Pass | Pass |
| E11 | Pass | Pass | Pass | Pass |
| CE1 | Pass | Pass | Fail | Pass |
| CE2 | Pass | Pass | Fail | Pass |
| CE3 | Pass | Pass | Fail | Pass |
| CE4 | Fail | Pass | Pass | Pass |
| CE5 | Fail | NT | NT | Fail |
| CE6 | Fail | Fail | NT | NT |
| CE7 | Fail | Fail | NT | Fail |
| CE8 | Fail | Fail | Fail | Fail |
| CE9 | Pass | Fail | Fail | Fail |
| CE10 | Pass | Pass | Pass | Fail |
| E22 | Pass | Pass | Pass | Pass |
| E23 | Pass | Pass | Pass | Pass |

| | | | | |
|---|---|---|---|---|
| NT= not tested | | | | |

### Examples 12-21 (E12-E21) and Comparative Examples 11-15 (CE11-CE15)

Curable compositions were made using the components as listed in Table 8 to test the corrosion and electro de-bonding characteristics of the adhesive. The designated syrup was used at 100 parts and the rest of the components were added at the amounts listed (for example, 5 g of PEG-A was added to 100 g of SRP-1 in E12).

Then each curable composition was coated between two release liners (RF12N and RF02N). The samples then were cured under 405 nm UV-LED lights with a total dosage of 3.1 J/cm2 as measured with a radiometer equipped with a high power sensing head (available under the trade designation "POWER PUCK II" from EIT Incorporated, Sterling, VA), resulting in transfer tapes, which had an adhesive layer thickness of 8 mils (200 µm).

**Table 8.**

| Sample | Syrup | PEG-A | PTHF-A | XT100 | HEA | EMS | Ionic Liquid type and amount | | HDDA | IRG651 |
|---|---|---|---|---|---|---|---|---|---|---|
| | | (Amounts in parts per hundred resin relative to 100 parts of syrup) | | | | | | | | |
| E12 | SRP-1 | 5 | | 15 | | 1 | BMI TFSI | 5 | 0.100 | 0.2 |
| E13 | SRP-6 | 5 | | 10 | | 1 | FC5000 | 5 | 0.125 | 0.5 |
| E14 | SRP-6 | 5 | | 10 | | 1 | FC5000 | 10 | 0.100 | 0.5 |
| E15 | SRP-7 | 5 | | 10 | | | FC5000 | 5 | 0.125 | 0.5 |
| E16 | SRP-7 | 5 | | 10 | | | TES TFSI | 5 | 0.125 | 0.5 |
| E17 | SRP-7 | | 10 | 10 | | | FC5000 | 5 | 0.025 | 0.5 |
| E18 | SRP-7 | 5 | | 10 | | | BMI PF6 | 5 | 0.100 | 0.5 |
| E19 | SRP-8 | 10 | | 10 | | | DMAEAM TFSI | 20 | 0.100 | 0.5 |
| E20 | SRP-7 | 5 | | 10 | | | BMI I | 5 | 0.100 | 0.5 |
| E21 | SRP-7 | 5 | | 10 | | | EP TFSI | 5 | 0.100 | 0.5 |
| CE11 | SRP-1 | 10 | | | | | BMI TFSI | 5 | 0.100 | 0.2 |
| CE12 | SRP-4 | 5 | | | | | BMI TFSI | 5 | 0.100 | 0.2 |
| CE13 | SRP-5 | | | | | | BMI TFSI | 5 | 0.100 | 0.2 |
| CE14 | SRP-7 | 5 | | 10 | | | None | | 0.125 | 0.5 |
| CE15 | SRP-8 | 5 | | 10 | 10 | | FC5000 | 5 | 0.100 | 0.5 |
| E24 | SRP-8 | 10 | | 10 | | | DMAEAM FSI | 10 | 0.100 | 0.5 |
| E25 | SRP-8 | 10 | | 10 | | | DMAEAM TCM | 10 | 0.100 | 0.5 |

**Table 9. Rheological Properties of the Adhesive Compositions**

| Sample | Rheology Temperature Ramp (1 Hz, 3 °C/min, <5% strain) | | |
|---|---|---|---|
| | T_{g} (°C) | G' 25 °C (kPa) | G' 85 °C (kPa) |
| E12 | -10 | 477 | 62 |
| E13 | -13 | 211 | 67 |
| E14 | -13 | 253 | 65 |
| E15 | -4 | 332 | 71 |
| E16 | -5 | 333 | 71 |
| E17 | -5 | 276 | 60 |
| E18 | -5 | 333 | 71 |
| E19 | -6 | 240 | 51 |
| E20 | -5 | 334 | 69 |
| E21 | -7 | 327 | 61 |
| CE11 | -12 | 73 | 21 |
| CE12 | -16 | 58 | 21 |
| CE13 | -19 | 101 | 42 |
| CE14 | -3 | 355 | 79 |
| CE15 | -12 | 288 | 71 |
| E24 | -7 | 225 | 67 |
| E25 | -3 | 162 | 52 |

**Table 10. 180 Degree Peel Adhesion, Dynamic Shear, and Random Free-Fall Data of Transfer Tapes**

| Sample | SS Peel Adhesion (N/mm) | Random Free Fall (drops until failure, max. 250) | SS Dynamic Shear (MPa) |
|---|---|---|---|
| E12 | 0.85 | 250 | 0.50 |
| E13 | 0.77 | 250 | 0.79 |
| E14 | 0.71 | 250 | 0.56 |
| E15 | 0.69 | 100 | 0.56 |
| E16 | 0.81 | 250 | 0.73 |
| E17 | 0.74 | 250 | 0.69 |
| E18 | 0.74 | 67 | 0.79 |
| E19 | 0.76 | 191 | 1.13 |
| E20 | 0.50 | 250 | 0.68 |
| E21 | 0.69 | 250 | 0.80 |
| CE11 | 0.96 | 250 | 0.79 |
| CE12 | 0.53 | 3 | 0.27 |
| CE13 | 1.04 | 54 | 0.61 |
| CE14 | 0.80 | 175 | 0.68 |
| CE15 | 0.46 | 250 | 0.58 |
| E24 | 0.81 | 250 | 0.88 |
| E25 | 0.90 | 250 | 0.83 |

| | | | |
|---|---|---|---|
| NT = not tested | | | |

**Table 11. Electro-debonding**

| Sample | Push Out Peak Stress | |
|---|---|---|
| | Initial (MPa) | % Reduction after 50 V for 3 min |
| E12 | 0.93 | 77% |
| E13 | 0.89 | 56% |
| E14 | 0.77 | 59% |
| E15 | 0.77 | 77% |
| E16 | 1.11 | 93% |
| E17 | 1.01 | 65% |
| E18 | 1.26 | 94% |
| E19 | 1.42 | 87%* |
| E20 | 1.14 | 94% |
| E21 | 1.34 | 70%* |
| CE11 | 0.33 | 79% |
| CE12 | 0.62 | 3% |
| CE13 | 1.00 | 4% |
| CE14 | 1.31 | -3% |
| CE15 | 0.89 | 35% |
| E24 | 1.27 | 84%* |
| E25 | 0.83 | 85%* |

| | | |
|---|---|---|
| * voltage held for 5 minutes instead of 3 minutes | | |

**Table 12. Corrosion results**

| Sample | PET to Cu Foil at 65°C/90% RH | | |
|---|---|---|---|
| | Day 1 | Day 3 | Day 7 |
| E12 | 1 | 2 | 2 |
| E13 | 1 | 1 | 1 |
| E14 | 1 | 1 | 1 |
| E15 | 1 | 1 | 1 |
| E16 | 1 | 1 | 1 |
| E17 | 1 | 1 | 1 |
| E18 | 1 | 1 | 2 |
| E19 | 1 | 1 | 1 |
| E20 | 1 | 2 | 2 |
| E21 | 1 | 1 | 1 |
| CE11 | 1 | 1 | 1 |
| CE12 | 3 | 3 | 3 |
| CE13 | 3 | 3 | 3 |
| CE14 | 1 | 1 | 1 |
| CE15 | 1 | 1 | 1 |
| E24 | 1 | 1 | 1 |
| E25 | 1 | 2 | 2 |

**Table 13. Summary of results**

| Sample | Shear Modulus (25 °C, 1 Hz) (G' > 100 kPa) | SS Peel Adhesion (≥ 0.5 N/mm) | Random Free Fall 1m (>50 drops) | SS Dynamic Shear (≥ 0.5 MPa) | Corrosion Test (<25% 3 day 65/90) | Electro-debonding (>50% peak force reduction) |
|---|---|---|---|---|---|---|
| E12 | Pass | Pass | Pass | Pass | Pass | Pass |
| E13 | Pass | Pass | Pass | Pass | Pass | Pass |
| E14 | Pass | Pass | Pass | Pass | Pass | Pass |
| E15 | Pass | Pass | Pass | Pass | Pass | Pass |
| E16 | Pass | Pass | Pass | Pass | Pass | Pass |
| E17 | Pass | Pass | Pass | Pass | Pass | Pass |
| E18 | Pass | Pass | Pass | Pass | Pass | Pass |
| E19 | Pass | Pass | Pass | Pass | Pass | Pass |
| E20 | Pass | Pass | Pass | Pass | Pass | Pass |
| E21 | Pass | Pass | Pass | Pass | Pass | Pass |
| CE11 | Fail | Pass | Pass | Pass | Pass | Pass |
| CE12 | Fail | Pass | Fail | Fail | Fail | Fail |
| CE13 | Pass | Pass | Fail | Pass | Fail | Fail |
| CE14 | Pass | Pass | Pass | Pass | Pass | Fail |
| CEl5 | Pass | Fail | Pass | Pass | Pass | Fail |
| E24 | Pass | Pass | Pass | Pass | Pass | Pass |
| E25 | Pass | Pass | Pass | Pass | Pass | Pass |

In the following additional exemplary embodiments are described:
A. A polymerizable composition comprising:
   (i) a polymerizable matrix comprising:
      (a) a (meth)acrylate macromer, wherein the (meth)acrylate macromer comprises a poly(ethylene oxide) group, a poly(propylene oxide) group, a poly(ethylene oxide-co-propylene oxide), a poly(tetrahydrofuran) group, or combinations thereof;
      (b) one or more of a C₁ to C₁₂ (meth)acrylate ester monomer;
      (c) a cross-linking agent; and
      (d) none to at most 7 wt % of a hydroxyl group-containing (meth)acrylate monomer; and
   (ii) a plurality of polymeric nanoparticles, wherein the polymeric nanoparticles comprise an interior region comprising a polymer having a glass transition temperature below room temperature and an outer shell comprising a polymer having a glass transition temperature of at least 50°C.
B. The composition according to embodiment A, wherein the plurality of polymeric nanoparticles has an average particle diameter of less than 800 nanometers.
C. The composition of any one of the previous embodiments, wherein the plurality of polymeric nanoparticles has an average particle diameter of at least 50 nanometers and at most 300 nanometers.
D. The composition of any one of the previous embodiments, wherein the plurality of polymeric nanoparticles are core-shell nanoparticles.
E. The composition of embodiment D, wherein the core-shell nanoparticles comprise a core comprising polybutadiene or poly(butadiene-co-styrene).
F. The composition of embodiment D, wherein the core-shell nanoparticles comprise a core comprising a (meth)acrylic polymer.
G. The composition of any one of embodiments D-F, wherein the core-shell nanoparticles comprise a shell comprising poly(methyl methacrylate).
H. The composition of any one of embodiments D-G, wherein the core-shell nanoparticles comprise a methacrylate-butadiene-styrene.
I. The composition of any one of embodiments 4-H, wherein the core-shell nanoparticles comprise a core to shell ratio between 90 to 10 and 10 to 90.
J. The composition of any one of the previous embodiments, wherein the composition comprises at least 0.1and at most 40 wt% of the plurality of nanoparticles based on the polymerizable matrix.
K. The composition according to any one of the previous embodiments, wherein the polymerizable matrix comprises up to 60 weight percent of the (meth)acrylate macromer.
L. The composition of any one of the previous embodiments, wherein the (meth)acrylate macromer has a number average molecule weight no greater than 10,000 Daltons.
M. The composition of any one of the previous embodiments, wherein the (meth)acrylate macromer has a number average molecule weight in a range of 350 to 10,000 Daltons.
N. The composition of any one of the previous embodiments, wherein the (meth)acrylate macromer comprises a poly(ethylene oxide) group.
O. The composition of any one of the previous embodiments, wherein the C₁ to C₁₂ (meth)acrylate ester monomer comprises one of the following: 2-methyl butyl acrylate, 2-ethyl hexyl acrylate, butyl acrylate, iso-octyl acrylate, or combinations thereof.
P. The composition of any one of the previous embodiments, wherein the polymerizable matrix comprises at least 10 wt % to at most 99.5 wt % of the C₁ to C₁₂ (meth)acrylate ester monomer.
Q. The composition of any one of the previous embodiments, wherein the polymerizable matrix further comprises acrylic acid.
R. The composition of any one of the previous embodiments, wherein the cross-linking agent is selected from one of the following: a triazine, a multifunctional (meth)acrylate, or combinations thereof.
S. The composition of any one of the previous embodiments, wherein the polymerizable matrix comprises 0.01 to 5 parts (solid/solid) of the cross-linking agent.
T. The composition of any one of the previous embodiments, wherein the composition is substantially free of solvent.
U. the composition of any one of the embodiments A-S, wherein the composition comprises a solvent.
V. The composition of any one of the previous embodiments, further comprising an ionic liquid.
W. The composition of embodiment V, wherein the ionic liquid comprises at least one of a nitrogen-containing cation ion, a phosphonium ion, or a sulfonium ion cation.
X. The composition of any one of embodiments V-W, wherein the ionic liquid comprises at least one of a sulfate, a sulfonate, a carboxylate, a phosphate, a borate, an imide, sulfonimide, imide, or halide anion.
Y. The composition of any one of embodiments V-X, wherein the ionic liquid is free of a carbon-fluorine bond, optionally wherein the ionic liquid is dimethylaminoethyl acrylate methyl bis(trifluoromethanesulfonyl)imide.
Z. The composition of any one of embodiments V-Y, wherein the ionic liquid is free of fluorine atoms, optionally wherein the ionic liquid is dimethylaminoethyl acrylate methyl tricyano methanide.
AA. The composition of any one of the previous embodiments, wherein the composition is a coatable resin.
BB. An at least partially polymerized reaction product of the polymerizable composition of any one of the previous embodiments.
CC. An adhesive article comprising an adhesive composition derived from the polymerizable composition according to any one of embodiments A-Y, wherein the adhesive composition is disposed on a substrate.
DD. The adhesive article of embodiment CC, wherein the adhesive composition has a shear storage modulus at 25 °C and 1 Hz of at least 100 kPa.
EE. The adhesive article of any one of embodiments CC-DD, wherein the adhesive article passes the Random Free Fall test after 50 drops.
FF. The adhesive article of any one of embodiments CC-EE, wherein the adhesive article has a dynamic shear at least 0.5 MPa.
GG. The adhesive article of any one of embodiments CC-FF, wherein the substrate is a backing.
HH. The adhesive article of embodiment GG, further comprising a second adhesive layer, wherein the backing is disposed between the adhesive composition and the second adhesive layer.
II. The adhesive article of any one of embodiments CC-HH, wherein the substrate is a liner comprising a release agent.
JJ. The adhesive article according to any one of embodiments CC-II, wherein the adhesive article is a tape, or a label.
KK. The adhesive article of any one of embodiments CC-JJ, wherein the adhesive composition is a layer having a first thickness and the plurality of polymeric particles have an average particle diameter which is less than the first thickness.
LL. A method of making an adhesive article comprising:
   (i) obtaining a polymerizable matrix comprising:
      (a) a (meth)acrylate macromer, wherein the (meth)acrylate macromer comprises a poly(ethylene oxide) group, a poly(propylene oxide) group, a poly(ethylene oxide-co-propylene oxide), a poly(tetrahydrofuran) group, or combinations thereof;
      (b) one or more of a C₁ to C₁₂ (meth)acrylate ester monomer;
      (c) a cross-linking agent; and
      (d) none to at most 7 wt % of a hydroxyl group-containing (meth)acrylate monomer; and
   (ii) adding a plurality of polymeric nanoparticles to the polymerizable matrix to form a composition.
MM. A method of embodiment LL, comprising at least partially polymerizing the polymerizable matrix to form an at least partially polymerized composition, before adding the plurality of polymeric nanoparticles.
NN. The method of any one of embodiments LL-MM, further comprising curing the composition.
OO. The method of embodiment NN, wherein the curing is by ultraviolet radiation.
PP. The method of any one of embodiments LL-OO, wherein the adhesive article is contacted with a substrate.
QQ. A method of separating an adhesive article, the method comprising:
   (I) providing an adhesive composite adhesively adhered between two conductive substrates, wherein the adhesive composite comprises:
      (i) a matrix derived from:
         (a) a (meth)acrylate macromer, wherein the (meth)acrylate macromer comprises a poly(ethylene oxide) group, a poly(propylene oxide) group, a poly(ethylene oxide-co-propylene oxide), a poly(tetrahydrofuran) group, or combinations thereof;
         (b) one or more of a C₁ to C₁₂ (meth)acrylate ester monomer;
         (c) a cross-linking agent; and
         (d) none to at most 7 wt % of a hydroxyl group-containing (meth)acrylate monomer;
      (ii) a plurality of polymeric nanoparticles, wherein the polymeric nanoparticles comprise an interior region comprising a polymer having a glass transition temperature below room temperature and an outer shell comprising a polymer having a glass transition temperature of at least 50°C; and
      (iii) an ionic liquid;
   (II) applying an electrical potential between the two conductive substrates; and
   (III) separating the two conductive substrates after applying the electrical potential.
RR. A compound according to the formula:

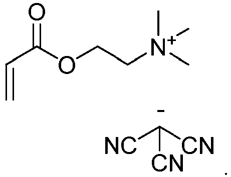

Foreseeable modifications and alterations of this invention will be apparent to those skilled in the art without departing from the scope and spirit of this invention. This invention should not be restricted to the embodiments that are set forth in this application for illustrative purposes.

## Claims

1. A polymerizable composition comprising:
(i) a polymerizable matrix comprising:
(a) a (meth)acrylate macromer, wherein the (meth)acrylate macromer comprises a poly(ethylene oxide) group, a poly(propylene oxide) group, a poly(ethylene oxide-co-propylene oxide), a poly(tetrahydrofuran) group, or combinations thereof;
(b) one or more of a C₁ to C₁₂ (meth)acrylate ester monomer;
(c) a cross-linking agent; and
(d) none to at most 7 wt % of a hydroxyl group-containing (meth)acrylate monomer;
(ii) a plurality of polymeric nanoparticles, wherein the polymeric nanoparticles comprise an interior region comprising a polymer having a glass transition temperature below room temperature and an outer shell comprising a polymer having a glass transition temperature of at least 50°C; and
(iii) an ionic liquid.

2. The composition according to claim 1, wherein the plurality of polymeric nanoparticles has an average particle diameter of less than 800 nanometers.

3. The composition of any one of the previous claims, wherein the plurality of polymeric nanoparticles are core-shell nanoparticles, optionally, wherein the core-shell nanoparticles comprise a core comprising a polybutadiene, a poly(butadiene-co-styrene), or a (meth)acrylic polymer.

4. The composition of claim 3, wherein the core-shell nanoparticles comprise a shell comprising a poly(methyl methacrylate) or a methacrylate-butadiene-styrene.

5. The composition of any one of the previous claims, wherein the composition comprises at least 0.1 and at most 40 wt% of the plurality of nanoparticles based on the polymerizable matrix.

6. The composition according to any one of the previous claims, wherein the polymerizable matrix comprises up to 60 weight percent of the (meth)acrylate macromer.

7. The composition of claim any one of the previous claims, wherein the ionic liquid comprises at least one of a nitrogen-containing cation ion, a phosphonium ion, or a sulfonium ion cation.

8. The composition of any one of the previous claims, wherein the ionic liquid comprises at least one of a sulfate, a sulfonate, a carboxylate, a phosphate, a borate, an imide, sulfonimide, imide, or halide anion.

9. The composition of any one of the previous claims, wherein the ionic liquid is free of a carbon-fluorine bond, optionally wherein the ionic liquid is dimethylaminoethyl acrylate methyl bis(trifluoromethanesulfonyl)imide.

10. The composition of any one of the previous claims, wherein the ionic liquid is free of fluorine atoms, optionally wherein the ionic liquid is dimethylaminoethyl acrylate methyl tricyano methanide.

11. An at least partially polymerized reaction product of the polymerizable composition of any one of the previous claims.

12. An adhesive article comprising an adhesive composition derived from the polymerizable composition according to any one of claims 1-10**,** wherein the adhesive composition is disposed on a substrate and optionally, wherein the adhesive composition has a shear storage modulus at 25 °C and 1 Hz of at least 100 kPa.

13. The adhesive article according to claim 12, wherein the adhesive article is a tape, or a label.

14. A method of making an adhesive article comprising:
(i) obtaining a polymerizable matrix comprising:
(a) a (meth)acrylate macromer, wherein the (meth)acrylate macromer comprises a poly(ethylene oxide) group, a poly(propylene oxide) group, a poly(ethylene oxide-co-propylene oxide), a poly(tetrahydrofuran) group, or combinations thereof;
(b) one or more of a C₁ to C₁₂ (meth)acrylate ester monomer;
(c) a cross-linking agent;
(d) none to at most 7 wt % of a hydroxyl group-containing (meth)acrylate monomer; and
(e) an ionic liquid; and
(ii) adding a plurality of polymeric nanoparticles to the polymerizable matrix to form a composition.

15. A method of separating an adhesive article, the method comprising:
(I) providing an adhesive composite adhesively adhered between two conductive substrates, wherein the adhesive composite comprises:
(i) a matrix derived from:
(a) a (meth)acrylate macromer, wherein the (meth)acrylate macromer comprises a poly(ethylene oxide) group, a poly(propylene oxide) group, a poly(ethylene oxide-co-propylene oxide), a poly(tetrahydrofuran) group, or combinations thereof;
(b) one or more of a C₁ to C₁₂ (meth)acrylate ester monomer;
(c) a cross-linking agent; and
(d) none to at most 7 wt % of a hydroxyl group-containing (meth)acrylate monomer;
(ii) a plurality of polymeric nanoparticles, wherein the polymeric nanoparticles comprise an interior region comprising a polymer having a glass transition temperature below room temperature and an outer shell comprising a polymer having a glass transition temperature of at least 50°C; and
(iii)an ionic liquid;
(II) applying an electrical potential between the two conductive substrates; and
(III) separating the two conductive substrates after applying the electrical potential.
